# EUROPÄISCHE PATENTSCHRIFT

(11) **EP 0 834 379 B1**
(45) Veröffentlichungstag und Bekanntmachung des Hinweises auf die Patenterteilung: **05.01.2000**
(21) Anmeldenummer: 97121623.9
(22) Anmeldetag: 09.02.1996
(51) Int. Cl.: B23Q 39/04, B23Q 5/40, B23Q 1/62

(54) **Drehmaschine**
Lathe
Tour

(30) Priorität: 10.02.1995 DE 19504371
(43) Veröffentlichungstag der Anmeldung: 08.04.1998
(62) Teilanmeldung aus: 96904031.0
(73) Patentinhaber: INDEX-WERKE GMBH & CO. KG HAHN & TESSKY, 73730 Esslingen (DE)
(72) Erfinder: Link, Helmut, 73773 Aichwald (DE); Trautmann, Günther-Heinrich, 73230 Kirchheim (DE)
(74) Vertreter: Hoeger, Stellrecht & Partner

(56) Entgegenhaltungen:
- EP-A- 0 433 722
- DE-A- 3 002 647
- DE-C- 3 703 173

## Beschreibung

Die Erfindung betrifft eine Drehmaschine, insbesondere eine Mehrspindeldrehmaschine, umfassend ein Maschinengestell mit mindestens einem Ständer und einem auf einer Seite des Ständers angeordneten Arbeitsraum, mindestens eine an dem Ständer angeordnete und um eine Spindelachse drehbare Werkstückspindel, welche mit einem Werkstückspannfutter dem Arbeitsraum zugewandt ist, einen in Richtung einer X-Achse und einer Z-Achse gegenüber dem Ständer bewegbaren Werkzeugschlitten, auf welchem ein Bearbeitungswerkzeug montiert ist, eine Schlittenführung, auf welcher der Werkzeugschlitten so sitzt, daß dieser in der X-Richtung verschiebbar ist, ein eine Kugelgewindespindel und eine Kugelgewindemutter umfassendes X-Vorschubgetriebe für den Werkzeugschlitten, ein in Z-Richtung bewegbares Z-Verschiebeteil - insbesondere auch als Z-Pinole bezeichnet -, an welchem die Schlittenführung sitzt und welches sich durch den Ständer hindurch erstreckt und an Führungen des Ständers bewegbar gelagert ist.

Eine derartige Drehmaschine ist beispielsweise aus der DE-A-25 17 759 oder der EP-A-0 433 722 bekannt. Bei diesen Drehmaschinen ist der Werkzeugschlitten zusammen mit der Schlittenführung und dem Vorschubmotor im Arbeitsraum angeordnet,

Der Erfindung liegt die Aufgabe zugrunde, eine Drehmaschine der gattungsgemäßen Art zu verbessern.

Diese Aufgabe wird bei einer Drehmaschine der eingangs beschriebenen Art erfindungsgemäß dadurch gelöst, daß eine Antriebswelle zum Antrieb der Kugelgewindespindel des X-Vorschubgetriebes durch das Z-Verschiebeteil verläuft und sich von einer Motorwelle eines X-Vorschubmotors bis zur Kugelgewindespindel des X-Vorschubgetriebes erstreckt.

Eine Lagerung für die Z-Pinole ist Gegenstand der Ansprüche 2 und 3.

Hinsichtlich der Anordnung des X-Vorschubmotors ist eine Lösung gemäß einem der Ansprüche 4 bis 7 besonders günstig.

Prinzipiell kann die Antriebswelle an einer Seite des Z-Verschiebeteils verlaufen. Es ist es jedoch besonders vorteilhaft, wenn die Antriebswelle ein Inneres des Z-Verschiebeteils durchsetzt.

Eine günstige Anordnung der Antriebswelle ist ferner Gegenstand der Ansprüche 8 oder 9.

Weitere Ausführungsbeispiele, betreffend eine ebenfalls günstige Anordnung eines Z-Vorschubs, sind Gegenstand der Ansprüche 10 bis 15.

Besondere vorteilhafte Ausgestaltungen der Drehmaschine sind Gegenstand der Ansprüche 16 bis 19.

Ein weiteres vorteilhaftes Ausführungsbeispiel der Erfindung in Form einer Mehrspindeldrehmaschine, umfaßt ein Maschinengestell, eine gegenüber dem Maschinengestell um eine im wesentlichen horizontale Drehachse drehbare Trommel, an der Trommel in jeweils einzelnen Positionen angeordnete Werkstückspindeln mit im wesentlichen parallel zu der Drehachse ausgerichteten Spindelachsen, welche bei der Bearbeitung eines Werkstücks relativ zur Trommel mittels Linearantrieben in Richtung ihrer Spindelachse und unabhängig voneinander bewegbar sind, und auf Werkzeugträgern angeordnete Werkzeuge zur Bearbeitung der in den Werkstückspindeln gehaltenen Werkstücke.

Bei dieser Mehrspindeldrehmaschine ist vorgesehen, daß jeder Werkstückspindel ein an der Trommel angeordneter eigener Linearantrieb zur Bewegung derselben in Richtung der Spindelachse zugeordnet ist und daß die Werkstückspindel ständig mit dem Linearantrieb gekoppelt ist.

Eine derartige Lösung hat den großen Vorteil, daß mit dieser eine möglichst genaue Positionierung der jeweiligen Werkstückspindel in Richtung ihrer Spindelachse möglich ist und daß nunmehr sämtliche Probleme ausgeschaltet sind, die dadurch entstehen, daß jede Werkstückspindel in jeder einzelnen Spindelstation durch jeweils einen anderen Linearantrieb angetrieben wird.

Ferner hat diese Lösung den großen Vorteil, daß die gesamten Probleme entfallen, die durch die jeweils zu lösende und wiederherzustellende Verbindung zwischen den einzelnen Linearantrieben und den einzelnen Werkstückspindeln entstehen.

Schließlich hat die erfindungsgemäße Lösung auch für die Reduzierung der Stückzeiten und Beschleunigung der Trommelschaltung den großen Vorteil, daß nicht die Notwendigkeit besteht, wie bei der DE-OS 25 28 001, vor jeder Trommelschaltung die Werkstückspindel in ihre Ausgangsstellung zurückzufahren. Bei der erfindungsgemäßen Lösung kann während der Trommelschaltung prinzipiell die Stellung der jeweiligen Werkstückspindel in Richtung ihrer Spindelachse beibehalten werden oder bereits die neue Position angefahren werden, sofern keine Kollision mit einem feststehenden Werkzeug zu befürchten ist.

Eine besonders vorteilhafte Lösung der Erfindung sieht vor, daß die Werkstückspindel bezüglich ihrer Position in Richtung der Spindelachse mittels des Linearantriebs definiert positionierbar und fixierbar ist. Diese Lösung hat zusätzlich noch gegenüber den kurvengesteuerten Linearantrieben den großen Vorteil, daß in einander entgegengesetzten Richtungen in Richtung der Spindelachse Kräfte aufgenommen werden können und somit beispielsweise auch Kopierdreharbeiten möglich sind, bei welchen Zerspanungskräfte in beiden, einander entgegengesetzten Richtungen auftreten.

Ein besonders vorteilhaftes Ausführungsbeispiel eines derartigen Linearantriebs sieht vor, daß dieser als Spindelantrieb ausgebildet ist und einen an der Trommel sitzenden Antriebsmotor umfaßt, wobei mit diesem Antriebsmotor und dem Spindelantrieb eine Längspositionierung der Werkstückspindel durchführbar ist, die gleichzeitig bei ihrer Beendigung einer Fixierung der Werkstückspindel darstellt.

Ein besonders vorteilhaftes Ausführungsbeispiel einer erfindungsgemäßen Mehrspindeldrehmaschine sieht vor, daß die Werkstückspindel in Richtung ihrer Spindelachse mittels einer NC-gesteuerten Achse bewegbar ist. Eine derartige NC-gesteuerte Achse hat einerseits die üblichen bekannten, durch die numerische Steuerung bedingten Vorteile und zusätzlich noch den Vorteil, daß Eilgangbewegungen der Werkstückspindel einfach realisierbar sind und insbesondere auch einfach unabhängig von den jeweils anderen Spindeln realisiert werden können, so daß bereits eine Eilgangbewegung bei einer der Werkstückspindeln der Trommel möglich ist, während bei der anderen Werkstückspindel der Trommel noch eine NC-gesteuerte Achsbewegung während der Bearbeitung erfolgt.

Der Linearantrieb für jede Werkstückspindel könnte grundsätzlich überall an jeder Stelle der Trommel angeordnet sein. Beispielsweise wäre es möglich, bezogen auf die Drehachse den Linearantrieb radial innenliegend zur jeweiligen Werkstückspindeln anzuordnen. Dies hätte jedoch den Nachteil, daß die Werkstückspindeln in relativ großem Abstand zur Drehachse an der Trommel positioniert sein müßten.

Aus diesem Grund sieht ein besonders vorteilhaftes Ausführungsbeispiel vor, daß der Linearantrieb an der Trommel bezogen auf die jeweilige Werkstückspindel radial außenliegend angeordnet ist.

Um einen besonders kompakten Aufbau der Spindeltrommel zu ermöglichen, sieht ein weiteres vorteilhaftes Ausführungsbeispiel vor, daß der Linearantrieb bezüglich der Werkstückspindel mit Winkelversatz angeordnet ist, so daß der Linearantrieb nicht exakt radial außenliegend zur jeweiligen Werkstückspindel steht, sondern mit Winkelversatz und somit wieder in Richtung auf die Drehachse zusätzlich noch versetzt angeordnet sein kann.

Besonders kompakt ist der Aufbau, wenn ein Antriebsmotor des Linearantriebs oder der gesamte Linearantrieb in einem Winkelbereich zwischen zwei aufeinanderfolgenden Werkstückspindeln angeordnet ist, so daß der Zwischenraum zwischen zwei Werkstückspindeln optimal ausgenutzt werden kann.

Hinsichtlich der Ausbildung der Werkstückspindeln selbst wurden noch keine näheren Ausführungen gemacht. So wäre es beispielsweise möglich, die Werkstückspindeln mit einem angeflanschten Spindelmotor zu versehen. Besonders vorteilhaft ist es jedoch, wenn die Werkstückspindel als Motorspindel ausgebildet ist, das heißt ein Einbaumotor in einer die Werkstückspindel aufnehmenden Pinole vorgesehen ist.

Hinsichtlich des weiteren Aufbaus der erfindungsgemäßen Mehrspindeldrehmaschine wurden bislang keine besonderen Angaben gemacht.

Grundsätzlich sind an dem Teil des Maschinengestells, an dem die Trommel gelagert ist, auch Schlitten für Werkzeuge angeordnet, mit welchen in einzelnen Stationen eine Bearbeitung der in den Werkstückspindeln gehaltenen Werkstücke erfolgt, wobei zusätzlich die Bewegbarkeit der Werkstückspindeln in Richtung ihrer Spindelachse als Z-Achsenbewegung bei der Bearbeitung des Werkstücks zum Einsatz kommt. Dies schließt aber nicht eine ebenfalls vorgesehene Z-Achsenbewegung des Werkzeugs relativ zum Maschinengestell aus.

Besonders vorteilhaft läßt sich jedoch die Bewegbarkeit der Werkstückspindel in Richtung ihrer Spindelachse dann einsetzen, wenn an dem Maschinengestell auf einer der Trommel gegenüberliegenden Seite des Arbeitsraums mindestens eine mit einer der Werkstückspindeln zusammenwirkende Bearbeitungseinrichtung angeordnet ist, wobei diese Bearbeitungseinrichtungen in vielfältiger, später noch im einzelnen beschriebener Art und Weise ausgebildet und eingesetzt sein können.

Vorzugsweise sind die Bearbeitungseinrichtungen so ausgebildet und angeordnet, daß sie unter Einsatz der Bewegbarkeit der Werkstückspindel in Richtung ihrer Spindelachse mit dieser zusammenwirken.

Die Bearbeitungseinrichtung oder die Bearbeitungseinrichtungen können dabei prinzipiell stationär an dem Maschinengestell angeordnet sein.

Ein besonders vorteilhaftes Ausführungsbeispiel der erfindungsgemäßen Mehrspindeldrehmaschine sieht jedoch vor, daß die Bearbeitungseinrichtung an einem Träger angeordnet ist, der um eine zur Drehachse der Trommel parallele Drehachse drehbar ist, wobei ein besonders kompakter Aufbau dann möglich ist, wenn der Träger koaxial zur Trommel drehbar ist.

Eine derartige auf einem koaxial zur Drehachse der Trommel drehbaren Träger angeordnete Bearbeitungseinrichtung bietet weitere vielfältige Vorteile im Zusammenhang mit der erfindungsgemäßen Lösung, da die Möglichkeit besteht, ein- und dieselbe Bearbeitungseinrichtung nicht nur in einer Station einzusetzen sondern in mehreren Stationen.

Dies ist beispielsweise dadurch möglich, daß der Träger bezüglich seiner Drehbewegung um die Drehachse starr mit der Trommel gekoppelt ist, so daß die einer Werkstückspindel zugeordnete Bearbeitungseinrichtung zugeordnet bleibt und sich mit der Werkstückspindel mitdreht und beispielsweise die Möglichkeit besteht, die Werkstückspindel gemeinsam mit der ihr zugeordneten Bearbeitungseinrichtung durch alle Spindelstationen hindurchzubewegen. Eine starre Kopplung der Drehbewegung von Trommel und Träger braucht nicht mechanisch realisiert zu sein, sondern kann auch durch geeignete Steuerung getrennter Antriebe realisiert werden.

Alternativ dazu ist es aber ebenfalls denkbar, daß der Träger unabhängig von der Trommel drehbar ist. Damit besteht die Möglichkeit, die Trommel und den Träger so zu drehen, daß die Werkstückspindel und die zugeordnete Bearbeitungseinrichtung nach wie vor jeweils in denselben Stationen stehen, diese jedoch nicht durch eine synchrone Bewegung erreichen. Es besteht aber auch die Möglichkeit eine Bearbeitungseinrichtung unterschiedlichen Werkstückspindeln zuzuordnen.

Besonders vorteilhaft ist es, wenn zum Antreiben der Trommel und des Trägers jeweils getrennte Antriebe vorgesehen sind, da damit die zwingend notwendige mechanische Verbindung, welche stets für den Spänefall und das Anordnen zusätzlicher, beispielsweise radial arbeitender Werkzeuge, hinderlich ist, entfallen kann.

Das Vorsehen eines separaten Antriebs für die Trommel und den Träger eröffnet die Möglichkeit den Arbeitsraum, insbesondere dessen zwischen den Stirnseiten der Trommel und des Trägers liegenden Teilraum, frei von mechanischen Verbindungen zwischen Trommel und Träger zu nutzen und damit weiteren Freiraum für die Anordnung und Bewegung von Werkzeugen zu erhalten.

Hinsichtlich der Drehbarkeit der Trommel wurden bislang keine näheren Angaben gemacht. Beispielsweise wäre es denkbar - wie bei konventionellen Mehrspindeldrehmaschinen üblich - die Trommel mit einem Malteserkreuz-Drehantrieb vorzusehen, der die Trommel in einzelne, fest zum Maschinengestell angeordnete Stationen bewegt und in diesen positioniert.

Besonders vorteilhaft ist es jedoch, wenn die Trommel als NC-Achse gesteuert drehbar ist, da ein derartiger Drehantrieb für die Trommel die Möglichkeit eröffnet, die Trommel entsprechend bestimmten Winkelgeschwindigkeitsprofilen zu drehen und insbesondere auch die Werkstückspindeln von einer Station zur jeweils nächsten oder aber auch unmittelbar zu einer weiter entfernt liegenden Station zu bewegen, was bei einer üblichen, Positionierung der Trommel durch ein Malteserkreuz nicht möglich ist.

In gleicher Weise ist es denkbar, bei einem drehbaren Träger, diesen ebenfalls mit einem Malteserkreuz-Drehantrieb zu drehen, noch vorteilhafter ist es jedoch, auch den Träger als NC-Achse gesteuert drehbar zu gestalten und somit mit dem Drehantrieb den Träger exakt positionierbar auszuführen.

Für eine Vielzahl von Bearbeitungen ist es besonders vorteilhaft, wenn die Bearbeitungseinrichtung bei der Bearbeitung des Werkstücks einer der Werkstückspindeln zugeordnet und dieser bezüglich des Arbeitsraums gegenüberliegend positionierbar ist, da in dieser Stellung der Bearbeitungseinrichtung die Bearbeitung ungestört durch die anderen Werkstückspindeln durchführbar ist.

Hierbei hat es sich als besonders zweckmäßig erwiesen, wenn der Träger mehrere Bearbeitungseinrichtungen trägt und jede Bearbeitungseinrichtung so angeordnet ist, daß sie mit mindestens einer zugeordneten Werkstückspindel der Trommel zusammenarbeitet.

Damit ist insbesondere in einfacher Art und Weise eine Mehrfachbearbeitung der in mehreren Werkstückspindeln gehaltenen Werkstücke möglich.

Die Bearbeitungseinrichtung kann beispielsweise so ausgebildet sein, daß sie nur einer Werkstückspindel zugeordnet werden kann. Besonders vorteilhaft ist es jedoch, wenn die Bearbeitungseinrichtung so ausgebildet ist, daß sie jeder Werkstückspindel der Trommel zugeordnet werden kann, so daß eine flexible Bearbeitung von Werkstücken möglich ist.

Eine besonders vorteilhafte Lösung sieht hierbei vor, daß die Bearbeitungseinrichtung bei Bearbeitung des Werkstücks mit einer Mittelachse koaxial zur Spindelachse der ihr zugeordneten Werkstückspindel ausgerichtet ist, um insbesondere die Möglichkeit zu schaffen, beispielsweise ein Werkstück einerseits mit der Werkstückspindel und andererseits mit der Bearbeitungseinrichtung zu halten und zu führen.

Insbesondere in all den Fällen, in denen ein Werkstück einerseits durch die Werkstückspindel und andererseits durch die Bearbeitungseinrichtung gehalten oder geführt werden soll, ist es vorteilhaft, wenn das gehaltene Werkstück in der Bearbeitungseinrichtung synchron mit der zugeordneten das Werkstück ebenfalls haltenden Werkstückspindel um die Drehachse drehbar ist, so daß das Werkstück beidseitig gehalten weitergedreht werden kann.

Die Bearbeitungseinrichtung kann im einfachsten Fall unverschieblich an dem Träger gehalten sein. Besonders vorteilhaft ist es jedoch, wenn die Bearbeitungseinrichtung relativ zum Träger parallel zur Richtung der Drehachse und unabhängig von anderen Bearbeitungseinrichtungen bewegbar ist.

Eine derartige Bewegbarkeit der Bearbeitungseinrichtung läßt sich besonders einfach dann realisieren, wenn jeder Bearbeitungseinrichtung ein eigener Linearantrieb zur Bewegung derselben in Richtung der Drehachse zugeordnet ist.

Besonders günstig ist es, insbesondere um die Bearbeitungseinrichtung möglichst präzise positionieren und in allen Drehstellungen des Trägers genau positionieren zu können, wenn die Bearbeitungseinrichtung ständig mit dem Linearantrieb gekoppelt ist.

Um weitere Fixiereinrichtungen für die Bearbeitungseinrichtung in ihrer jeweiligen Position in Richtung parallel zur Drehachse nicht zu benötigen ist es vorteilhaft, wenn die Bearbeitungseinrichtung bezüglich ihrer Position parallel zur Richtung der Drehachse mittels des Linearantriebs definiert positionierbar und fixierbar ist.

Dies läßt sich am einfachsten dann realisieren, wenn der Linearantrieb als Gewindespindelantrieb ausgebildet ist.

Ferner ist es, insbesondere um eine hohe Genauigkeit bei der Positionierung der Bearbeitungseinrichtungen zu erreichen, vorteilhaft, wenn die Bearbeitungseinrichtung selbst als Ganzes relativ zum Träger ausschließlich linear bewegbar ist, da eine derartige lediglich in einer Achsrichtung mögliche Bewegbarkeit der gesamten Bearbeitungseinrichtung eine sehr präzise Führung derselben an dem Träger erlaubt.

Besonders zweckmäßig ist es, insbesondere um die Bearbeitungseinrichtung einerseits genau positionieren zu können und andererseits um diese möglichst für Eilgangbewegungen recht schnell bewegen zu können, wenn die Bearbeitungseinrichtung in Richtung parallel zur Drehachse mittels einer NC-gesteuerten Achse bewegbar ist.

Besonders zweckmäßig für den Spänefall bei der Bearbeitung und für eine optimale Zugänglichkeit des Werkstücks, insbesondere auch zu einer Übergabe des Werkstücks von der Trommel zum Träger und umgekehrt, ist es, wenn ein Bearbeitungsmittel der Bearbeitungseinrichtungen vor einer den Arbeitsraum zugewandten, insbesondere diesen begrenzenden Stirnseite der Trommel oder des Trägers positionierbar ist.

Besonders vorteilhaft ist es dabei, wenn das Bearbeitungsmittel vor einer Stirnseite der Trommel oder des Träger steht, um somit sicherzustellen, daß das Bearbeitungsmittel stets selbst im Arbeitsraum angeordnet ist, um eine optimale Zugänglichkeit zu gewährleisten.

Die Bearbeitungseinrichtung wurde im Zusammenhang mit den bislang beschriebenen Ausführungsbeispielen nicht näher erläutert. So sieht ein besonders vorteilhaftes Ausführungsbeispiel vor, daß die Bearbeitungseinrichtung eine Werkzeugaufnahme umfaßt.

Ein anderes vorteilhaftes Ausführungsbeispiel sieht vor, daß die Bearbeitungseinrichtung eine Werkzeugaufnahme für ein rotierendes Werkzeug umfaßt.

Ein weiteres Ausführungsbeispiel sieht vor, daß die Bearbeitungseinrichtung einen Reitstock umfaßt.

Ein weiteres vorteilhaftes Ausführungsbeispiel sieht vor, daß die Bearbeitungseinrichtung eine Langdrehführung umfaßt.

Ein besonders bevorzugtes Ausführungsbeispiel sieht vor, daß die Bearbeitungseinrichtung als Werkstückspindel ausgebildet ist, wobei die Werkstückspindel entweder zum Spannen und Halten eines Werkstücks oder auch zum Führen eines Werkstücks bei einer Langdrehbearbeitung eingesetzt werden kann, wobei im letztgenannten Fall die Werkstückspannmittel zur Führung des aus dieser Werkstückspindel herausziehbaren Werkstücks, beispielsweise in Form einer Materialstange dienen und beispielsweise die gegenüberliegende Werkstückspindel zieht.

In diesem Fall sind bevorzugterweise die Werkstückspindeln so ausgebildet, daß sich einen sich in axialer Richtung derselben erstreckenden Führungskanal für die Materialstangen aufweist.

Die Werkstückspindel selbst wurde nicht näher spezifiziert. Ein besonders vorteilhaftes Ausführungsbeispiel sieht vor, daß die Werkstückspindel als Motorspindel ausgebildet ist.

Bei der erfindungsgemäßen Maschine könnte prinzipiell sowohl die Trommel als auch der Träger stets in einer Richtung weiter drehbar sein. In diesen Fällen ist - wie aus dem Stand der Technik bekannt - beispielsweise ein Malteserkreuz-Drehantrieb vorgesehen, der die Trommel oder den Träger stets so dreht, daß die Werkstückspindel oder die Bearbeitungseinrichtung von einer Station zur nächsten wandert.

Eine derartige Arbeitsweise hat jedoch den Nachteil, daß die zu den Werkstückspindeln und Bearbeitungseinrichtungen zu führenden Steuer- und Versorgungsleitungen über Drehzuführungen mit diesen verbunden werden müssen, die - insbesondere bei Übertragung digitaler Daten - Probleme aufwerfen.

Aus diesem Grund sieht ein vorteilhaftes Ausführungsbeispiel der erfindungsgemäßen Lösung vor, daß die Trommel und/oder der Träger von einer Ausgangsstellung um einen maximalen Winkel in eine Endstellung und von dieser wieder zurück in die Ausgangsstellung drehbar sind und daß zwischen dem Maschinengestell und der Trommel bzw. dem Träger ein flexibler Versorgungsstrang angeordnet ist, welcher endseitig einerseits mit dem Maschinengestell und andererseits mit der Trommel bzw. dem Träger fest verbunden ist und durch seine Flexibilität der Drehbewegung um den Maximalwinkel folgt.

Diese Lösung hat den großen Vorteil, daß eine stationäre Verbindung mit allen auf der Trommel oder dem Träger angeordneten Werkstückspindeln bzw. Bearbeitungseinrichtungen möglich ist und daher auch die Möglichkeit besteht, diese beispielsweise während der Drehbewegung der Trommel bzw. des Trägers anzusteuern und auch mit Antriebsleistung zu versorgen, um die Stückzeiten zu reduzieren. Beispielsweise kann dadurch bereits während des Drehens der Trommel eine Werkstückspindel auf eine bestimmte Drehzahl beschleunigt oder von einer bestimmten Drehzahl auf eine andere abgebremst werden oder es besteht die Möglichkeit, die Werkstückspindel von einer in der vorhergehenden Station erforderlichen Position in Richtung parallel zur Drehachse in eine andere, in der nächsten Station benötigte Position zu verfahren oder auch beispielsweise so zu verfahren, daß eine Kollision mit einem stationären Werkzeug vermieden wird. Das gleiche gilt für die Bearbeitungseinrichtungen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine seitliche Ansicht einer teilweise längs Linie I-I in Fig. 2 und 3 geschnittenen erfindungsgemäßen Mehrspindeldrehmaschine mit Bearbeitungseinrichtungen, die beispielhaft als Werkstückspindeln dargestellt sind;
- Fig. 2: einen Schnitt längs Linie II-II in Fig. 1;
- Fig. 3: einen Schnitt längs Linie III-III in Fig. 1;
- Fig. 4: eine ausschnittsweise vergrößerte Schnittdarstellung durch eine Trommel in Fig. 1;
- Fig. 5: einen Schnitt längs Linie V-V in Fig. 1;
- Fig. 6: eine vergrößerte Darstellung eines ersten Ausführungsbeispiels einer erfindungsgemäßen Bearbeitungseinrichtung;
- Fig. 7: eine vergrößerte Darstellung eines zweiten Ausführungsbeispiels einer erfindungsgemäßen Bearbeitungseinrichtung;
- Fig. 8: eine vergrößerte Darstellung eines dritten Ausführungsbeispiels einer erfindungsgemäßen Bearbeitungseinrichtung;
- Fig. 9: eine vergrößerte Darstellung eines vierten Ausführungsbeispiels einer erfindungsgemäßen Bearbeitungseinrichtung;
- Fig. 10: eine vergrößerte Darstellung eines fünften Ausführungsbeispiels einer erfindungsgemäßen Bearbeitungseinrichtung;
- Fig. 11: eine vergrößerte ausschnittsweise Darstellung eines Schnitts durch einen Werkzeugschlitten längs Linie VI-VI zum Beispiel in Fig. 2;
- Fig. 12: einen Schnitt längs Linie VII-VII in Fig. 1 in der Ausgangsstellung der Trommel;
- Fig. 13: einen Schnitt ähnlich Fig. 12 in der Endstellung der Trommel;
- Fig. 14: eine ausschnittsweise schematische Darstellung einer Bearbeitung eines Werkstücks bei einer ersten Version der Mehrspindeldrehmaschine;
- Fig. 15: eine ausschnittsweise schematische Darstellung einer Bearbeitung eines Werkstücks bei einer zweiten Version der Mehrspindeldrehmaschine;
- Fig. 16: eine ausschnittsweise schematische Darstellung einer Bearbeitung eines Werkstücks bei einer dritten Version der Mehrspindeldrehmaschine;
- Fig. 17: eine ausschnittsweise schematische Darstellung einer Bearbeitung eines Werkstücks bei einer vierten Version der Mehrspindeldrehmaschine;
- Fig. 18: eine ausschnittsweise schematische Darstellung der Bearbeitung eines Werkstücks bei einer fünften Version der Mehrspindeldrehmaschine und
- Fig. 19: eine schematische ausschnittsweise Darstellung einer Bearbeitung eines Werkstücks bei einer sechsten Version der Mehrspindeldrehmaschine.

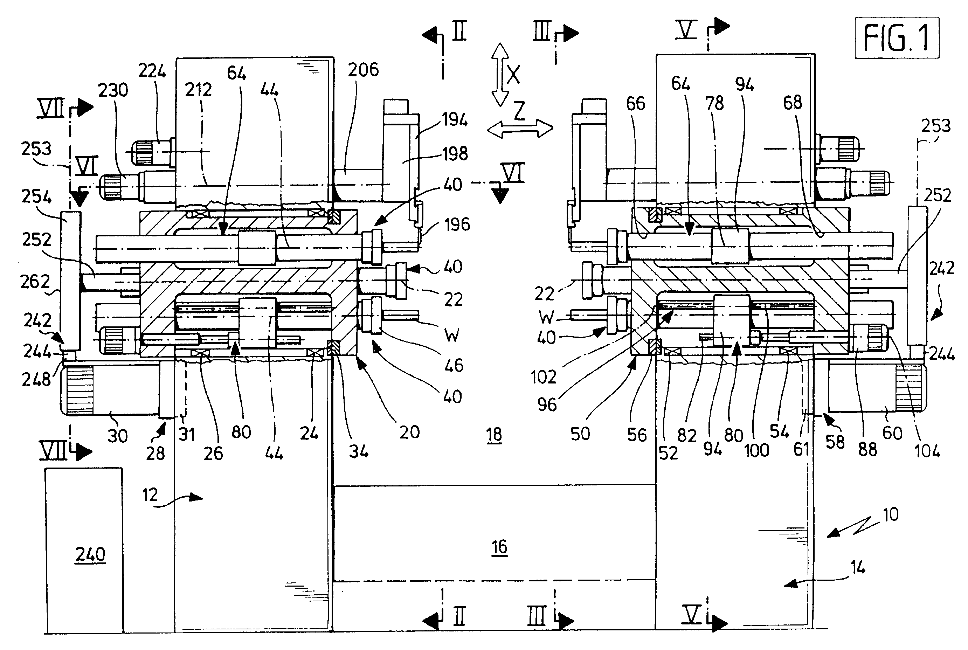

Ein Ausführungsbeispiel einer erfindungsgemäßen Mehrspindeldrehmaschine, dargestellt in Fig. 1, weist ein als Ganzes mit 10 bezeichnetes Maschinengestell auf, welches einen ersten Ständer 12, und einen zweiten Ständer 14 umfaßt, die mittels eines Basisteils 16 miteinander verbunden sind. Zwischen den Ständern 12, 14 liegt ein als Ganzes mit 18 bezeichneter Arbeitsraum.

In dem ersten Ständer 12 ist eine als Ganzes mit 20 bezeichnete erste Trommel mit einem vorderen, dem Arbeitsraum 18 zugewandten Trommellager 24 und einem hinteren Trommellager 26 auf einer dem Arbeitsraum 18 abgewandten Seite des ersten Ständers 12 um eine horizontale Drehachse 22 drehbar gelagert. Zum Drehen der Trommel 20 ist ein als Ganzes mit 28 bezeichneter Drehantrieb, umfassend einen Antriebsmotor 30 und zum Beispiel ein Zahnriemengetriebe 31 vorgesehen, mit welchem die Trommel 20 im Bereich des hinteren Trommellagers 26 antreibbar ist. Dabei ist der Drehantrieb 28 vorzugsweise als numerisch gesteuerte Drehachse ausgebildet, mit welcher die Trommel 20 präzise in jeder Drehstellung positionierbar ist.

Zur Fixierung der einzelnen Drehstellungen der Trommel 20 ist auf der dem Arbeitsraum 18 zugewandten Seite des ersten Ständers 12 eine zwischen diesem und der Trommel 20 wirksame dreiteilige Hirthverzahnung 34 vorgesehen, die zwischen dem vorderen Trommellager 24 und dem Arbeitsraum 18 liegt und hydraulisch betätigbar ist.

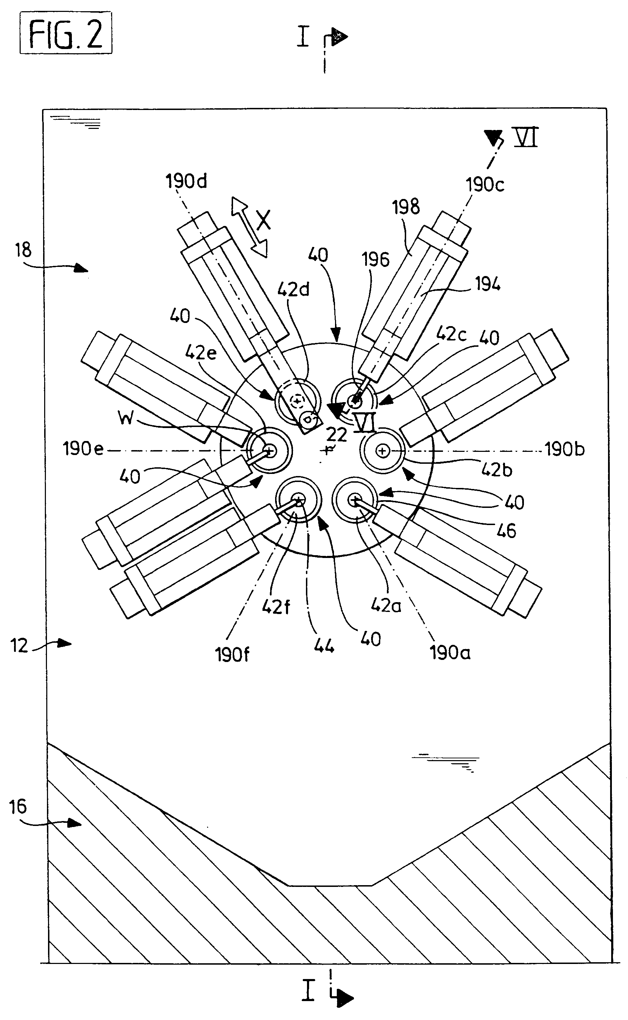

Wie in Fig.1 und 2 dargestellt, sind an der Trommel 20 eine Vielzahl von ersten Bearbeitungseinrichtungen 40, beispielsweise ausgebildet als Werkstückspindeln, in einzelnen Positionen 42a, 42b, 42c, 42d, 42e und 42f angeordnet, wobei die Bearbeitungseinrichtungen 40 in jeder der Positionen 42a bis f denselben radialen Abstand von der Drehachse 22 aufweisen und alle Positionen in demselben Winkelabstand um die Drehachse 22 liegen.

Alle Bearbeitungseinrichtungen 40 erstrecken sich ferner mit ihrer Mittelachse 44 parallel zur Drehachse 22 und somit ebenfalls in horizontaler Richtung und sind so angeordnet, daß ein von den Bearbeitungseinrichtungen 40 umfaßtes Bearbeitungsmittel 46, beispielsweise ein Werkstückspannfutter, dem Arbeitsraum 18 zugewandt ist, so daß ein in diesen gespanntes Werkstück W im Arbeitsraum 18 bearbeitet werden kann.

In dem zweiten Ständer 14 ist als Träger für weitere Bearbeitungseinrichtungen 40 eine zweite Trommel 50 angeordnet, welche in dem zweiten Ständer 14 durch ein vorderes, dem Arbeitsraum 18 zugewandtes Trommellager 52 und ein hinteres Trommellager 54 auf einer dem Arbeitsraum 18 abgewandten Seite des zweiten Ständers 14 koaxial zur Drehachse 22 drehbar gelagert ist. Dabei ist zum Drehen der zweiten Trommel 50 ein Drehantrieb 58 mit einem Antriebsmotor 60 und einem Zahnriemengetriebe 61 vorgesehen, welcher im Bereich des hinteren Trommellagers 54 die zweite Trommel 50 antreibt. Vorzugsweise ist der Drehantrieb 58 ebenfalls als numerisch gesteuerte Drehachse ausgebildet, so daß die Trommel 50 in jeder beliebigen Drehstellung exakt positionierbar ist.

Zur Fixierung der einzelnen Drehstellungen der zweiten Trommel 50 ist auf der dem Arbeitsraum 18 zugewandten Seite des zweiten Ständers 14 eine zwischen diesem und der Gegentrommel 50 wirksame dreiteilige Hirthverzahnung 56 vorgesehen, die zwischen dem vorderen Trommellager 52 und dem Arbeitsraum 18 liegt und hydraulisch betätigbar ist.

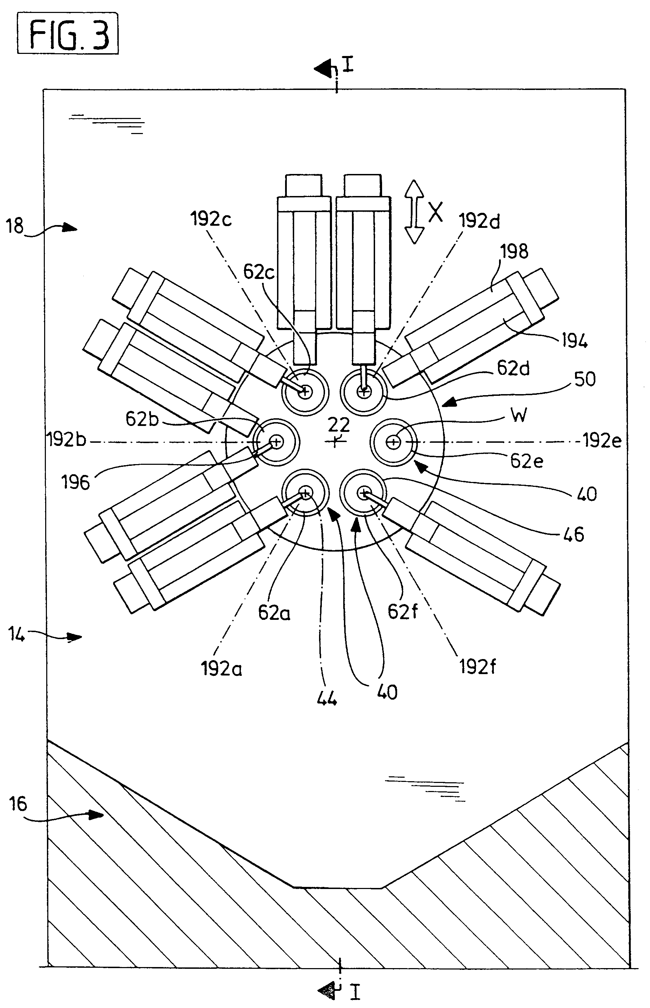

Wie in Fig. 3 dargestellt, sind in der zweiten Trommel in sechs Positionen 62a bis f vorgesehen, wobei die einzelnen Positionen 62a bis f im selben radialen Abstand von der Drehachse 22 und beispielsweise im selben Winkelabstand relativ zueinander angeordnet sind wie die Positionen 42a bis f. In diesen Positionen 62a bis f sind Bearbeitungseinrichtungen 40 mit zur Drehachse 22 parallel ausgerichteten Mittelachsen 44 angeordnet, die unterschiedlichster Art sein können.

Jede der Bearbeitungseinrichtungen 40 ist in einer Pinole 64 angeordnet, wobei die Pinole 64 Führungsöffnungen 66 und 68 in einem vorderen Lagerschild 70 bzw. einem hinteren Lagerschild 72 der ersten Trommel 20 oder der zweiten Trommel 50 durchsetzt und in den Führungsöffnungen 66 und 68 entweder fest eingebaut oder mittels Linearführungen 74 und 76 in Richtung ihrer Mittelachse 78, die mit der Mittelachse 44 der Bearbeitungseinrichtungen 40 zusammenfällt, parallel zur Drehachse 22 verschieblich geführt ist.

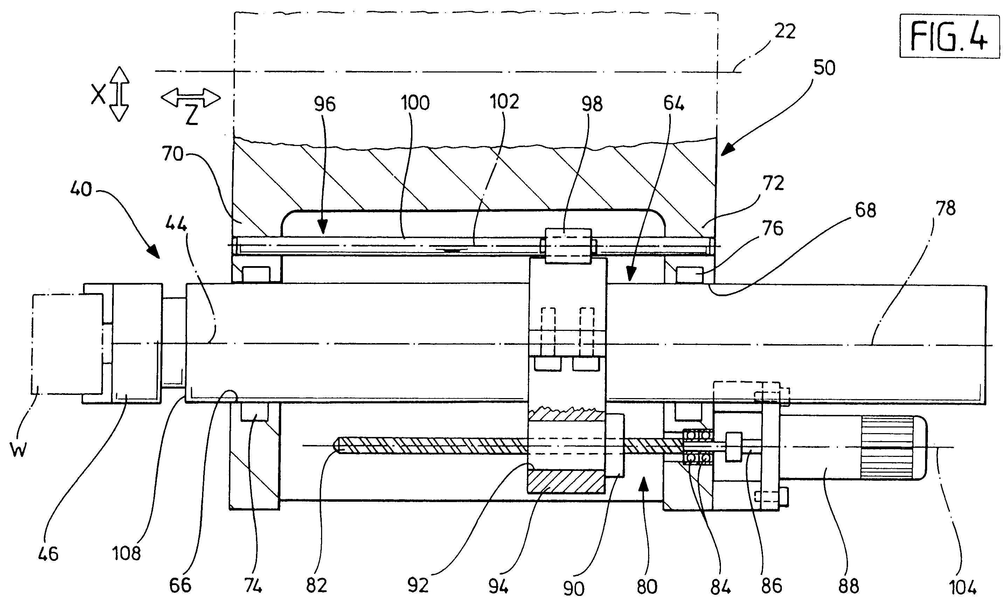

Zum definierten Verschieben der Pinole 64 relativ zur Trommel 20 und/oder zur Trommel 50 ist ein in Fig. 4 als Ganzes mit 80 bezeichneter Linearantrieb vorgesehen, welcher eine sich zwischen den Lagerschilden 70 und 72 erstreckende Kugelgewindespindel 82 umfaßt, welche mit einem Axial- und Radiallager 84 an dem hinteren Lagerschild 72 gelagert ist und direkt mit einer Motorwelle 86 eines Antriebsmotors 88 verbunden ist, der auf einer dem vorderen Lagerschild 70 abgewandten Seite des hinteren Lagerschildes 72 angeordnet und an diesem gehalten ist. Die Kugelgewindespindel 82 durchsetzt ihrerseits eine Kugelgewindemutter 90, welche in einem Durchbruch 92 eines Arms 94 angeordnet ist, der seinerseits die Pinole 64 an ihrer Außenseite umgreift und unverschieblich an dieser festgelegt ist. Der Arm 94 ist vorzugsweise auf einer dem Linearantrieb 80 gegenüberliegenden Seite in einer als Ganzes mit 96 bezeichneten Längsführung geführt, welche einen Führungskörper 98 aufweist, der seinerseits an einem Führungsstab 100 gleitet, wobei sich der Führungsstab 100 mit seiner Längsachse 102 parallel zur Mittelachse 78 der Pinole 64 und parallel zur Drehachse 22 erstreckt und in dem vorderen und hinteren Lagerschild 70 und 72 der Gegentrommel 50 gehalten ist. Die Längsführung 96 dient dabei zur drehfesten und in Richtung der Mittelachse 78 allerdings längsverschieblichen Führung der Pinole 64 an der Gegentrommel 50.

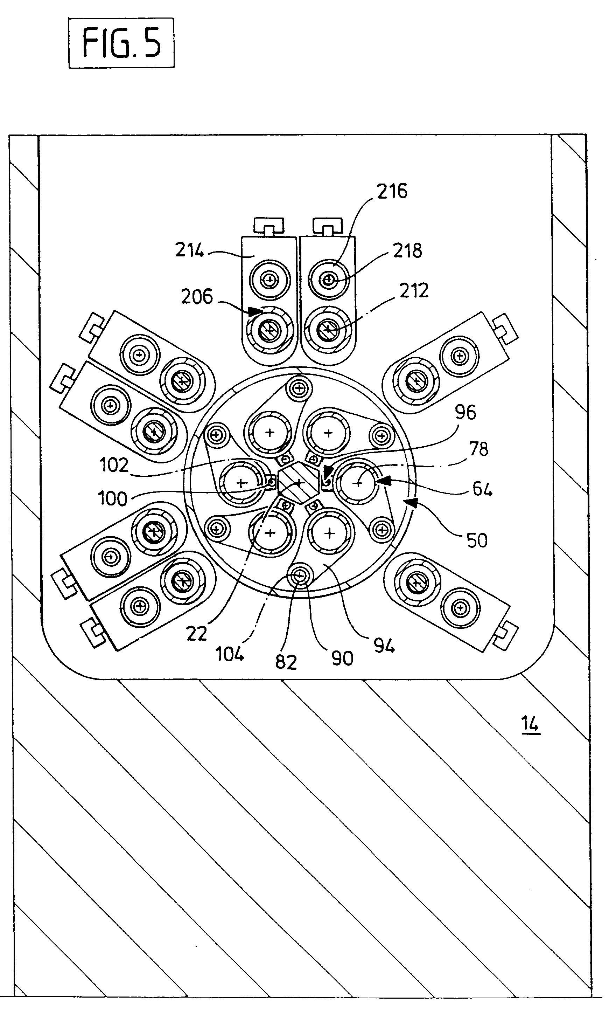

Vorzugsweise ist, wie in Fig. 5 dargestellt, der Linearantrieb 80 so angeordnet, daß eine Längsachse 104 in einem Winkelbereich mittig zwischen den Mittelachsen 78 zweier aufeinanderfolgender Pinolen 64, vorzugsweise auf Lücke zu diesen beiden Pinolen 64 angeordnet ist.

Vorzugsweise ist die Längsführung 96 auf einer der Drehachse 22 zugewandten Seite der jeweiligen Pinole 64 angeordnet, wie ebenfalls in Fig. 5 dargestellt.

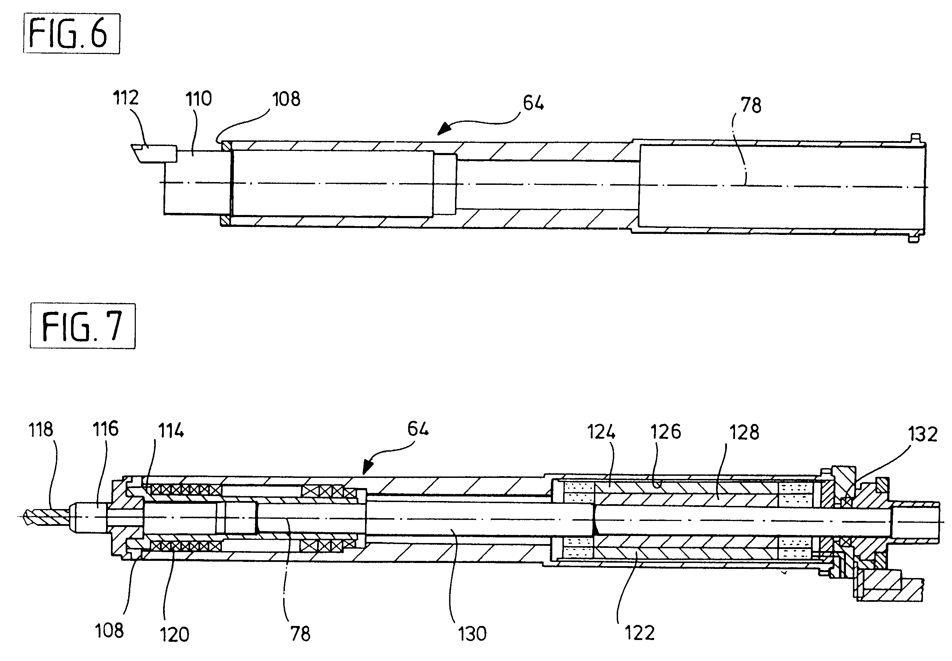

Die Bearbeitungseinrichtungen 40 können in unterschiedlichster Art und Weise ausgebildet sein. Beispielsweise kann - wie in Fig. 6 dargestellt - in einer Pinole 64 ein einfaches, fest in der Pinole 64 über einen Werkzeughalter 110 verankertes Werkzeug 112 angeordnet sein, das durch Bewegung der Pinole 64 auf das Werkstück in der gegenüberliegenden beispielsweise in Form einer Werkstückspindel ausgebildeten Bearbeitungseinrichtung 40 zu bewegbar ist, wobei die Drehlage des Werkzeugs 112 bezüglich der Mittelachse 78 durch die drehfeste Lagerung der Pinole 64 in der Trommel 50 eindeutig festgelegt ist.

Eine zweite Möglichkeit einer erfindungsgemäßen Bearbeitungseinrichtung, dargestellt in Fig. 7, umfaßt eine in der Pinole 64 drehbar angeordnete Werkzeugaufnahme 114, in welche ein Halter 116 eines rotierenden Werkzeugs 118 einsetzbar ist, wobei das rotierende Werkzeug 118 beispielsweise als Fräser ausgebildet ist.

Diese Werkzeugaufnahme 114 ist über Drehlager 120 drehbar um die Mittelachse 78 in der Pinole 64 gelagert und durch einen Einbaumotor 122, welcher in einem der Werkzeugaufnahme 114 gegenüberliegenden Bereich der Pinole 64 aufgenommen ist, antreibbar. Dabei ist ein Stator 124 des Einbaumotors fest in einer endseitigen Ausnehmung 126 der Pinole 64 verankert, während ein Rotor 128 auf einer Antriebswelle 130 sitzt, die einerseits auf einer Seite über das Drehlager 120 der Werkzeugaufnahme 114 und andererseits über ein endseitiges Drehlager 132 im Bereich des der Werkzeugaufnahme 114 gegenüberliegenden Endes drehbar gelagert ist. Die Antriebswelle 130 treibt dabei die fest mit dieser verbundene Werkzeugaufnahme 114 an.

Durch Verschiebung der Pinole 64 längs ihrer Mittelachse 78 ist das rotierende Werkzeug 118 beispielsweise auf das in der gegenüberliegenden als Werkstückspindel ausgebildeten Bearbeitungseinrichtung 40 gehaltene Werkstück W zustellbar und gleichzeitig ist dieses Werkzeug 118 durch den Einbaumotor 122 rotierend antreibbar.

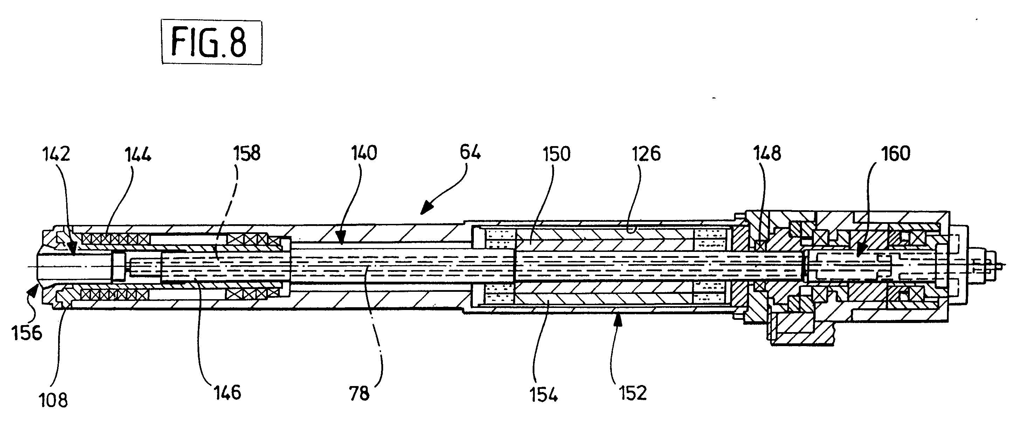

Bei einem dritten Ausführungsbeispiel einer erfindungsgemäßen Bearbeitungseinrichtung, dargestellt in Fig. 8 ist in der Pinole 64 eine als Ganzes mit 140 bezeichnete Werkstückspindel angeordnet. Diese Werkstückspindel 140 umfaßt ein als Ganzes mit 142 bezeichnetes Werkstückspannmittel, welches an der dem Arbeitsraum 18 zugewandten Vorderseite 108 der Pinole 64 in dieser angeordnet ist und in der Pinole 64 mittels eines Drehlagers 144 drehbar gelagert ist.

Das Werkstückspannmittel 142 sitzt dabei auf einem Spindelrohr 146, welches die gesamte Pinole 64 durchsetzt und rückseitig derselben über ein Drehlager 148 ebenfalls an dieser drehbar gelagert ist und dabei koaxial zur Mittelachse 78 als Drehachse drehbar ist. Auf dem Spindelrohr 146 sitzt ein Rotor 150 eines als Ganzes mit 152 bezeichneten Einbaumotors, wobei ein Stator 154 fest in der rückwärtigen Ausnehmung 126 der Pinole 64 angeordnet ist.

Zur Betätigung zum Beispiel einer Spannzange 156 des Werkstückspannmittels führt von dieser innerhalb des Spindelrohrs 146 ein Spannrohr 158 zu einem hydraulischen Spannzylinder 160, welcher auf einer dem Werkstückspannfutter 142 gegenüberliegenden Seite der Pinole 64 angeordnet ist, so daß über den hydraulischen Spannzylinder 160 die Spannzange 156 in üblicher Weise über das Spannrohr 158 betätigbar ist.

Die in der Pinole 64 eingesetzte Werkstückspindel 140 ist dabei durch Bewegung der Pinole 64 in Richtung ihrer Mittelachse 78 auf das in der gegenüberliegenden Bearbeitungseinrichtung, beispielsweise einer Werkstückspindel, angeordnete Werkstück W zu- oder von diesem wegbewegbar.

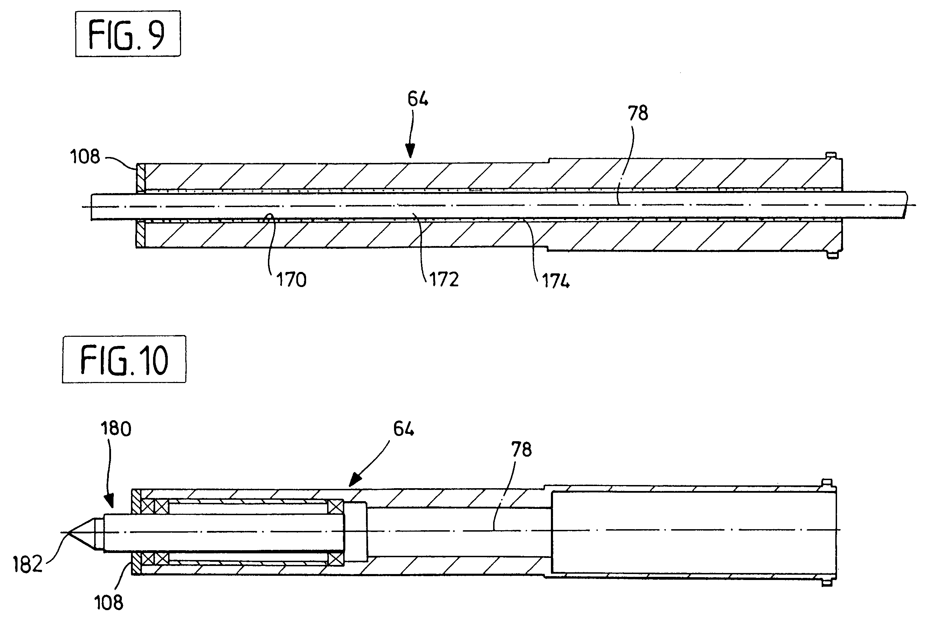

Bei einem weiteren Ausführungsbeispiel einer erfindungsgemäßen Bearbeitungseinrichtung ist, wie in Fig. 9 dargestellt, in der Pinole 64 eine Führung 170 für eine Materialstange 172 vorgesehen, wobei die Führung 170 beispielsweise durch eine sich durch die Pinole 64 erstreckende Führungsbüchse gebildet ist, in welcher die Materialstange 172 drehbar mittels eines Ölfilms 174 und in Richtung der Mittelachse 78 verschieblich koaxial zur Mittelachse 78 geführt ist. Durch eine derartige Führung 170 wird die Möglichkeit geschaffen, in Kombination mit der gegenüberliegenden Werkstückspindel 46 eine Langdrehbearbeitung durchzuführen, wobei in diesem Fall die gegenüberliegende Bearbeitungseinrichtung 40 als Werkstückspindel ausgebildet und in gleicher Weise wie im Zusammenhang mit der Werkstückspindel 140 beschrieben, in Richtung ihrer Spindelachse verschiebbar im Spindelträger 20 gelagert sein muß.

Bei einem weiteren Ausführungsbeispiel einer erfindungsgemäßen Bearbeitungseinrichtung, dargestellt in Fig. 10, ist in der Pinole 64 ein Reitstock 180 mit Spitze 182 vorgesehen.

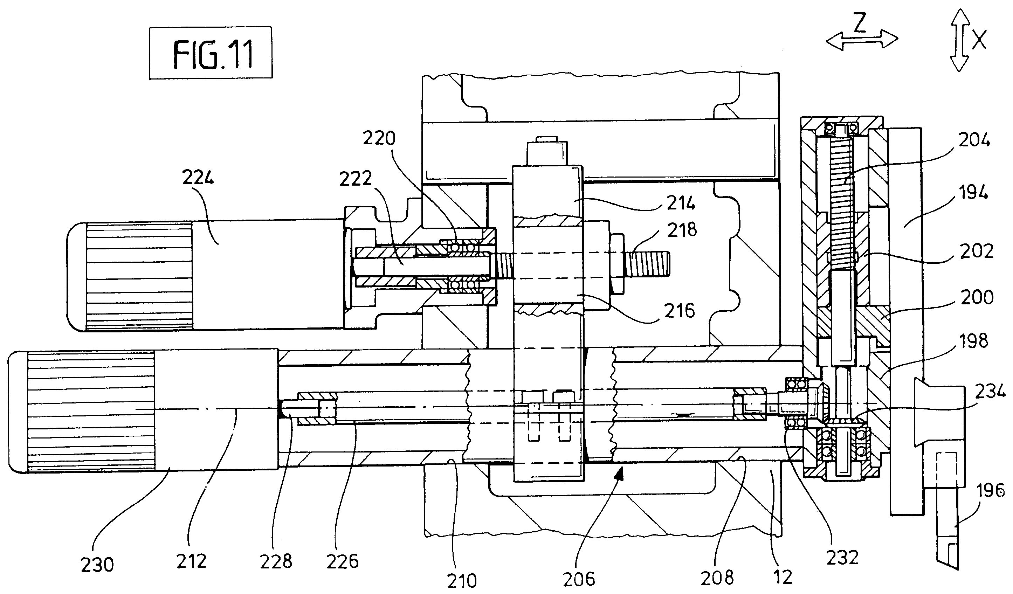

Bei dem dargestellten Ausführungsbeispiel sind die in den Positionen 42a bis f und 62 a bis f angeordneten Bearbeitungseinrichtungen 40 in unterschiedlichen bezüglich den Ständern 12 und 14 stationären Stationen 190a bis f und 192 a bis f durch Drehen der Träger 20 oder 50 positionierbar. An den beiden Ständern 12 und 14 sind einer oder mehreren der Stationen 190 oder einer oder mehreren der Stationen 192, in welche die Bearbeitungseinrichtungen 40 bringbar sind, in insgesamt in Richtung der X- und Z-Achse gegenüber den Ständern 12, 14 bewegbare Werkzeugschlitten 194 zugeordnet, auf welchen Bearbeitungswerkzeuge 196 montiert sind, wie in Fig. 1 und 11 dargestellt.

Der Werkzeugschlitten 194 sitzt dabei auf einer als Ganzes mit 198 bezeichneten Schlittenführung und ist auf dieser quer zur Drehachse 22 und somit auch quer zu den Mittelachsen 78 der Pinolen 64, vorzugsweise senkrecht zu diesen, in Richtung der X-Achse verschiebbar. Zur definierten Positionierung des Schlittens 194 trägt dieser eine Halterung 200 für eine Kugelgewindemutter 202, welche von einer Kugelgewindespindel 204 durchsetzt ist. Die Kugelgewindespindel 204 ist dabei endseitig in der Schlittenführung 198 und axial unverschieblich drehbar gelagert.

Die gesamte Schlittenführung 198 ist in Richtung der Z-Achse bewegbar und sitzt dazu ihrerseits an einer Z-Pinole 206, welche den jeweiligen Ständer 12 oder 14 durchsetzt und in Führungen 208 und 210 des jeweiligen Ständers 12 oder 14 in Richtung ihrer Mittelachse 212 parallel zur Drehachse 22 oder zu den Mittelachsen 78 verschiebbar gelagert ist.

Zur Verschiebung der Z-Pinole 206 umgreift diese ein Halter 214, welcher eine neben der Z-Pinole 206 angeordnete Kugelgewindemutter 216 trägt, die ihrerseits von einer Kugelgewindespindel 218 durchsetzt ist, wobei sich diese Kugelgewindespindel 218 innerhalb des jeweiligen Ständers 12 oder 14 erstreckt und parallel zur Mittelachse 212 ausgerichtet ist. Die Kugelgewindespindel 218 ist beispielsweise an einem Ende mittels eines Drehlagers 220 drehbar in dem jeweiligen Ständer 12, 14 gelagert und mit einer Antriebswelle 222 eines als Ganzes mit 224 bezeichneten Vorschubmotors verbunden, welcher auf einer der Schlittenführung 198 gegenüberliegenden Seite des Ständers 12 oder 14 übersteht und an diesem gehalten ist.

Zum Antrieb der Kugelgewindespindel 204 ist die Z-Pinole 206 noch von einer Antriebswelle 226 durchsetzt, die mit einer Motorwelle 228 eines Vorschubmotors 230 verbunden ist und sich bis zur Kugelgewindespindel 204 erstreckt. Die Antriebswelle 226 ist dabei endseitig der Z-Pinole 206 in einem Drehlager 232 drehbar gelagert und über ein Kegelradgetriebe 234 in Antriebsverbindung mit der Kugelgewindespindel 204.

Mittels des Vorschubmotors 230 ist somit die Kugelgewindespindel 204 drehbar und somit der Querschlitten 194 quer zur jeweiligen Spindelachse 44 oder Mittelachse 78 verschiebbar, während durch den Vorschubmotor 224 die gesamte Z-Pinole 206 parallel zu ihrer Mittelachse 212 und somit auch parallel zu den Spindelachsen 44 oder den Mittelachsen 78 verschiebbar ist.

Zur Ansteuerung der Drehantriebe 28 und 58, des insgesamt in Richtung der X- und Z-Achse bewegbaren Werkzeugs 196 in den einzelnen Stationen 190 und 192 sowie der Bearbeitungseinrichtungen 40 in den einzelnen Positionen 42 und 62 ist eine als Ganzes mit 240 bezeichnete Maschinensteuerung vorgesehen (Fig. 1).

Eine Verbindung zwischen der Maschinensteuerung 240 und den auf den Trommeln 20 und/oder 50 angeordneten Bearbeitungseinrichtungen 40 erfolgt im Fall jeder der Trommeln 20 und/oder 50 durch eine auf einer dem Arbeitsraum abgewandten Seite des jeweiligen Ständers 12 bzw. 14 angeordnete Versorgungsverbindung 242 zwischen dem Maschinengestell 10 und der jeweiligen Trommel 20 bzw. 50, welche einen Versorgungsstrang 244 umfaßt, der in einer Gliederkette 246 geführt ist, wobei der Versorgungsstrang 244 an einem Ende 248 fest zum Maschinengestell 10 auf der Rückseite des jeweiligen Ständers 12 bzw. 14 angeordnet ist und mit einem anderen Ende 250 fest mit einem über die jeweilige Trommel 20 bzw. 50 auf der jeweils dem Arbeitsraum 18 gegenüberliegenden Seite überstehenden Rohr 252 verbunden ist, wobei der Versorgungsstrang 244 zwischen den beiden Enden 248 und 250 in einer senkrecht zur Drehachse 22 verlaufenden Ebene 253 spiralförmig verläuft. Ferner ist das Rohr 252 noch von einem Schneckengehäuse 254 umgeben, aus welchem der Versorgungsstrang 244 durch eine Öffnung 256 herausgeführt ist.

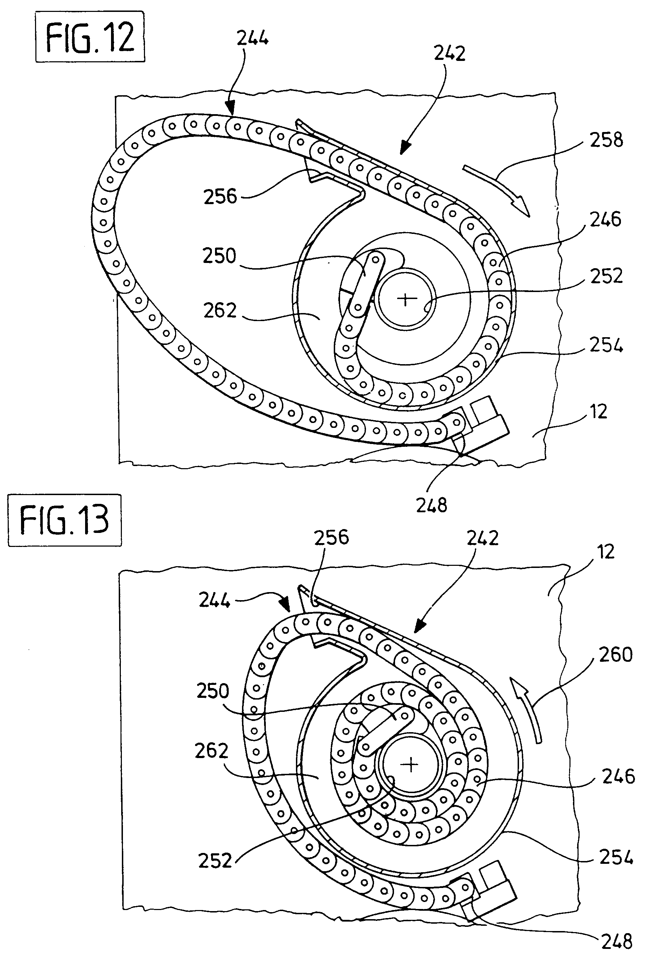

Wie in Fig. 12 und Fig. 13 dargestellt, ist die jeweilige Trommel 20 bzw. 50 um einen Maximalwinkel von beispielsweise 360-360/(Zahl der Stationen) Grad, bei diesem Ausführungsbeispiel 300 Grad, von einer in Fig. 12 dargestellten Ausgangsstellung in Richtung des Pfeils 258 in eine in Fig. 13 dargestellte Endstellung drehbar, wobei in dieser Endstellung der Versorgungsstrang 244 sich in Form einer engen Spirale um das Rohr 252 aufgewickelt hat. Ferner ist die jeweilige Trommel 20 bzw. 50 entgegengesetzt zum Pfeil 258, das heißt in Richtung des Pfeils 260, von der in Fig. 13 dargestellten Endstellung in die Ausgangsstellung dargestellt in Fig. 12, drehbar, wobei sich der spiralförmig um das Rohrs 252 gewickelte Versorgungsstrang 244 abwickelt und sich durch die Öffnung 256 aus dem Schneckengehäuse 254 herausschiebt.

Vorzugsweise sind beiderseits des Schneckengehäuses 254 Führungsscheiben 262 vorgesehen, die den Versorgungsstrang 244 dabei in der senkrecht zur Drehachse 22 verlaufenden Ebene 253 halten.

Damit ist die jeweilige Trommel 20 bzw. 50 beispielsweise um den Winkel von 300 Grad in einzelnen Schritten so drehbar, daß jede der Bearbeitungseinrichtungen 40 in den Positionen 42 sämtliche Stationen 190 bzw. 192 durchläuft, so lange bis die Endstellung erreicht ist. Anschließend erfolgt ein schnelles Zurückdrehen ohne Anhalten in den einzelnen Stationen 190 bzw. 192 in die Ausgangsstellung und von dieser wieder ausgehend ein Durchlaufen mit Anhalten in den einzelnen Stationen 190 bzw. 192.

Mit einer erfindungsgemäßen Mehrspindeldrehmaschine sind nun folgende Bearbeitungen mit nachfolgend im einzelnen beschriebenen Versionen durchführbar.

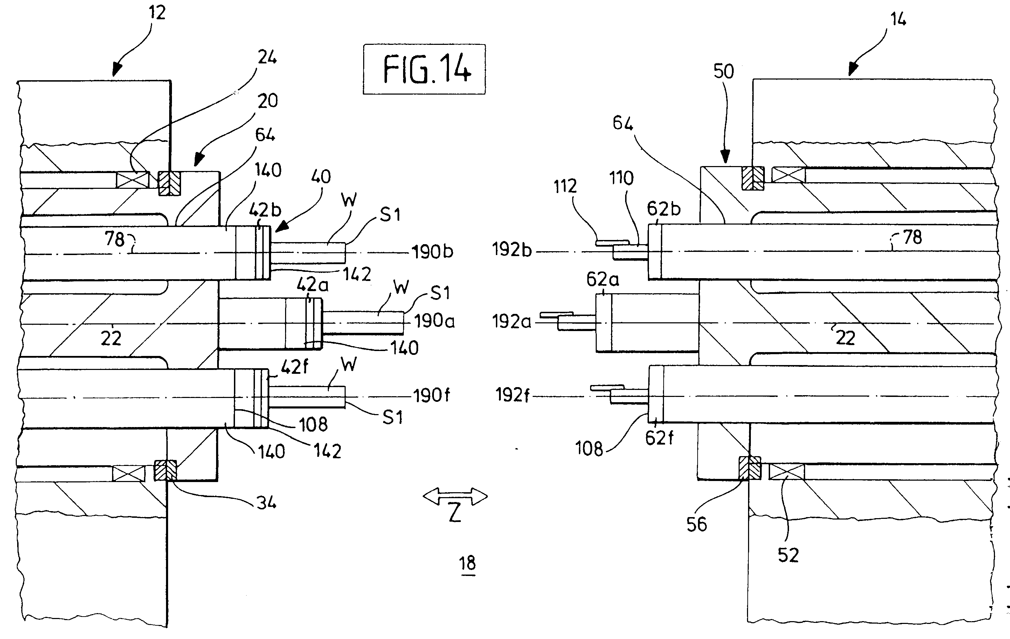

Bei einer einfachsten Version (Fig. 14) der erfindungsgemäßen Mehrspindeldrehmaschine umfaßt jede der Bearbeitungseinheiten 40 in der Trommel 20 eine Werkstückspindel 140, in deren Werkstückspanneinrichtung 142 ein Werkstück W spannbar ist.

Die der ersten Trommel gegenüberliegende zweite Trommel 50 umfaßt in den Pinolen 64 angeordnete und dem Arbeitsraum 18 zugewandte Werkzeuge 112, die an Werkzeughaltern 110 gehalten sind.

Im einfachsten Fall besteht sogar die Möglichkeit, bei dieser Ausführungsform die Trommel 50 nicht um die Drehachse 22 mittels des Drehantriebs 58 drehbar zu gestalten, sondern fest im zweiten Ständer 14 zu verankern.

Das Werkstück W ist nun durch Bewegen der Werkstückspindel 140 in Richtung der Mittelachse 78 der Pinole 64 in Richtung des Werkzeugs 112 bewegbar, wobei diese Bewegung eine Z-Achsenbewegung zur Bearbeitung des Werkstücks W darstellt. Das Werkstück W ist dabei gleichzeitig durch den Einbaumotor 152 rotierend angetrieben, so daß durch die Z-Achsenbewegung zwischen dem Werkstück W und dem Werkzeug 112 eine Bearbeitung des Werkstücks W auf einer Seite S1 durchführbar ist.

Eine derartige Bearbeitung des Werkstücks W erfolgt, beispielsweise wie in Fig. 14 dargestellt, in der Station 190a. Nach Beendigung der Bearbeitung des Werkstücks W in der Station 190a erfolgt ein Weiterschalten der Trommel 20 derart, daß das Werkstück W mit der Werkstückspindel 140 in der nächstfolgenden Station 190b positioniert wird, während das in der vorangehenden Station 190f positionierte Werkstück W mit der dieses haltenden Werkstückspindel 140 in der Station 190a positioniert wird und somit dieselbe Bearbeitung durch Relativbewegung längs der Z-Achse mittels des Werkzeugs 112 erfährt.

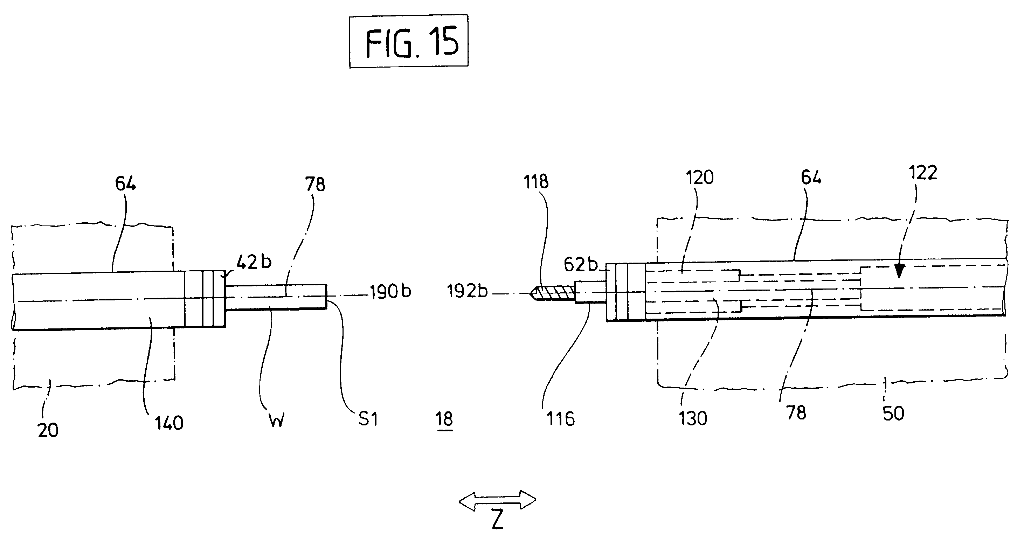

Analog zur Bearbeitung des Werkstücks W mittels des Werkzeugs 112 besteht bei einer anderen Version die Möglichkeit, wie in Fig. 15 dargestellt, beispielsweise in der Spindelposition 190b, das Werkstück W mittels des rotierenden Werkzeugs 118 zu bearbeiten, welches in der als drehbare Werkzeugaufnahme 120 ausgebildeten Bearbeitungseinrichtung 40 in Position 62b gelagert und durch den Einbaumotor 122 in der Pinole 64 rotierend angetrieben ist. Auch hier erfolgt die Relativbewegung zwischen dem Werkstück W und dem Werkzeug 118 längs der Z-Achse durch Verschieben der Werkstückspindel 140 in der Pinole 64 in der im Zusammenhang mit der Fig. 14 beschriebenen Art und Weise. In dieser Spindelstation kann ebenfalls durch Weiterschalten der Trommel 20 jeweils das nächstfolgende Werkstück W - in gleicher Weise wie im Zusammenhang mit der Bearbeitung gemäß Fig. 14 beschrieben - bearbeitet werden.

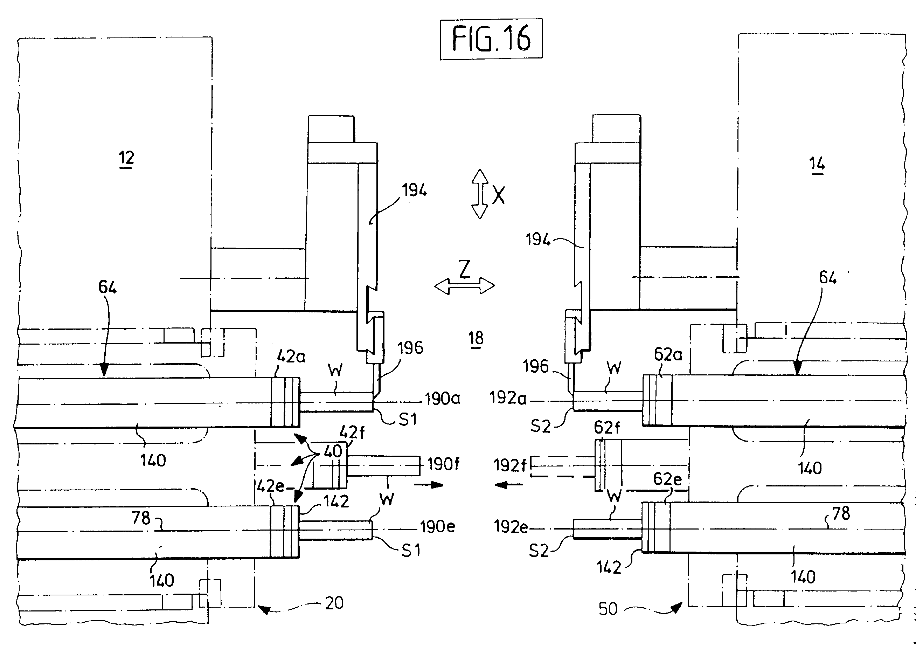

Bei einer weiteren Version einer erfindungsgemäßen Mehrspindeldrehmaschine, dargestellt in Fig. 16, sind in der Trommel 20 als Bearbeitungseinrichtungen 40 ebenfalls Werkstückspindeln 140 in den Pinolen 64 vorgesehen, während in der zweiten Trommel 50 in den Pinolen 64 auch Werkstückspindeln 140 vorgesehen sind. In diesem Fall ist die zweite Trommel 50 synchron mit der ersten Trommel 20 um die Drehachse 22 drehbar und die einzelnen Bearbeitungseinrichtungen 40 in den einzelnen Positionen 42a und 62a sind koaxial zueinander angeordnet und eindeutig einander zugeordnet.

Die synchrone Drehung der beiden Trommeln 20 und 50 erfolgt dabei durch synchrone Ansteuerung der beiden als numerisch gesteuerte Drehachsen ausgebildeten Drehantriebe 28 und 58.

Vorzugsweise sind bei diesem Ausführungsbeispiel auch beide Werkstückspindeln 140 in Richtung der Mittelachse 78 bewegbar.

Bei dieser Version besteht nun die Möglichkeit, beispielsweise in der Station 190a und 192a jeweils mittels des Werkzeugs 196, angeordnet auf jeweils einem beschriebenen Schlitten 194, die Werkstücke W zu bearbeiten, wobei die Werkzeuge 196 einerseits durch Bewegung der Schlitten 194 relativ zum Werkstück W längs der X-Achse bewegbar sind und andererseits die Werkstücke W relativ zum Werkzeug 196 in Richtung der Z-Achse durch Verschieben der entsprechenden Pinole 64 in Richtung deren Mittelachse 78 bewegbar sind.

Dabei erfolgt in der Station 190a beispielsweise eine Bearbeitung des Werkstücks W auf der Seite S1 und in der Station 192a eine Bearbeitung des gegenüberliegend angeordneten Werkstücks W auf der Seite S2, das heißt in jeder Station eine Bearbeitung eines Werkstücks W auf der Vorderseite S1 und des gegenüberliegenden Werkstücks W auf der Rückseite S2.

Bei einer derartigen Version ist es ferner möglich, beispielsweise in den Stationen 190f und 192f eine Übergabe des Werkstücks W von der Werkstückspindel 140 in der Position 42f in die Werkstückspindel 140 in der Position 62f dadurch vorzunehmen, daß die Werkstückspindeln 140 sich in Richtung deren Mittelachse 78 aufeinander zu bewegen und das Werkstück W von der Werkstückspanneinrichtung 142 in der Position 42f in die Werkstückspanneinrichtung 142 der Position 62f zu übergeben, so daß beispielsweise in den Stationen 190a bis 190e eine Bearbeitung der Vorderseite S1 des Werkstücks W erfolgt, in der Station 190f eine Übergabe des Werkstücks W von der Werkstückspindel 140 in der Position 42f in die Werkstückspindel 140 der Position 62f in der Station 192f und ausgehend davon in den Stationen 192a bis 192e eine Bearbeitung der Rückseite S2 des Werkstücks W erfolgt.

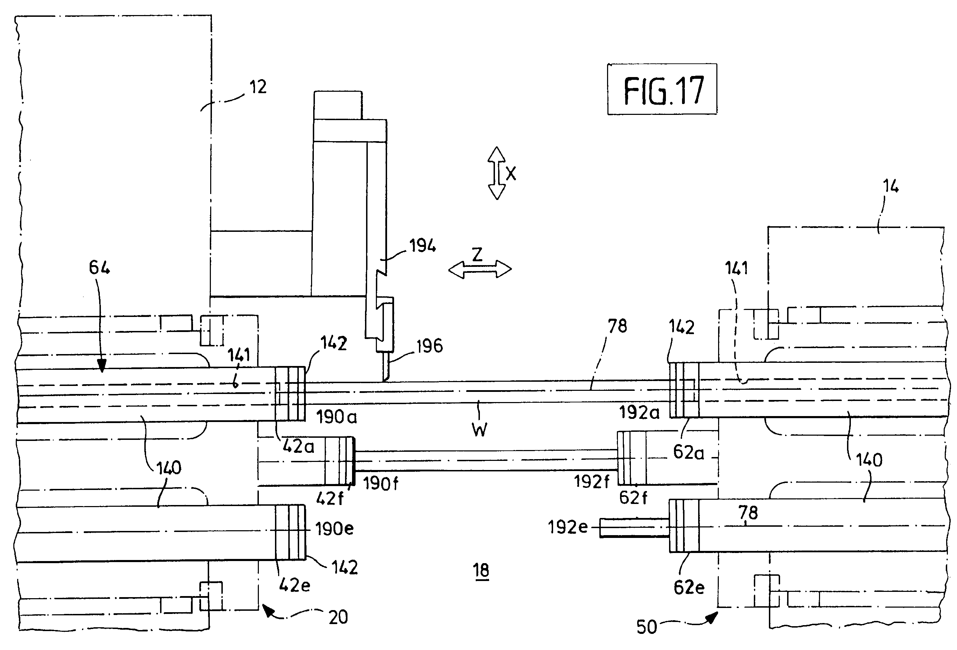

Bei einer weiteren Version einer erfindungsgemäßen Mehrspindeldrehmaschine, dargestellt in Fig. 17, ist jeder als Werkstückspindel 140 ausgebildeten Bearbeitungseinrichtung in den Positionen 42 eine ebenfalls als Werkstückspindel 140 ausgebildete Bearbeitungseinrichtung in den Positionen 62 zugeordnet, wobei die Trommeln 20 und 50 ebenfalls synchron zueinander drehbar sind.

Bei dieser Version ist vorgesehen, ein Werkstück W durch beide Werkstückspanneinrichtungen 142 beider Werkstückspindeln 140 zu spannen und in der Art eines Wellendrehens das Werkstück W mittels eines Werkzeugs 196 auf einem Schlitten 194 über die gesamte Länge zwischen den beiden Werkstückspannmittel 142 zu überdrehen. Ein derartiges Wellendrehen erfolgt beispielsweise in den einander gegenüberliegenden Stationen 190a und 192a, während beispielsweise in den übrigen Stationen 190b bis f und 192b bis f ebenfalls noch eine zusätzliche Wellenbearbeitung möglich ist (z.B. in den Stationen 190f und 192f) oder ein endseitiges Bearbeiten des Werkstücks W (z.B. in den Stationen 190e und 192e), wobei in diesem Fall die Werkstückspindeln 140 jeweils so ausgebildet sind, daß das Werkstück W durch einen zentralen Führungskanal 141 in der jeweiligen Werkstückspindel 140 hindurchschiebbar ist.

Beim endseitigen Bearbeiten des Werkstücks W erfolgt, wie beispielsweise bereits im Zusammenhang mit Fig. 16 beschrieben, eine Z-Achsenbewegung durch Verschiebung der jeweiligen Werkstückspindel 140 relativ zum Werkzeug 196.

Ferner ist eine Verschiebung der Werkstückspindeln 140 in Richtung der Mittelachse 78 erforderlich, um das Werkstück W entweder an beiden Seiten zu spannen oder um das Werkstück W soweit in den jeweiligen Führungskanal 141 einzuschieben, daß eine endseitige Bearbeitung desselben möglich ist.

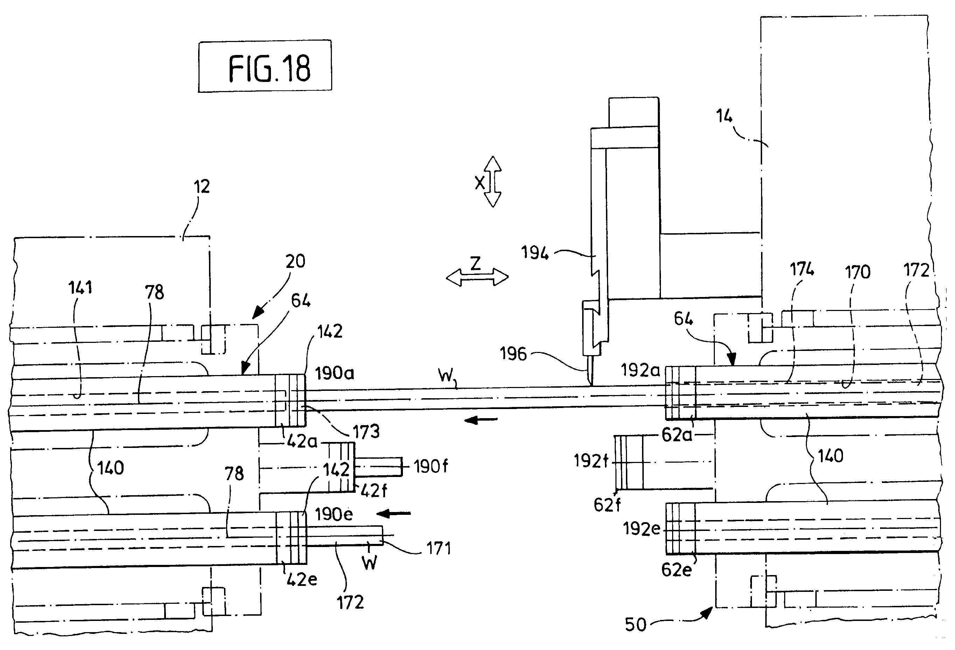

Bei einer weiteren Version, dargestellt in Fig. 18 ist in jeder Position 42 der Trommel 20 eine Werkstückspindel 140 vorgesehen, welche längs deren Mittelachse 78 verschiebbar ist. Jeder Werkstückspindel 140 ist in jeder Position 62 der Trommel 50 eine im Zusammenhang mit Fig. 9 beschriebene Führung 170 zugeordnet, wobei durch diese Führung 170 jeweils eine Materialstange 172 zuführbar ist, welche über die Führung 170 in den Arbeitsraum 18 hineinragt.

Die Materialstange 172 ist an einem Ende 173 durch die Werkstückspanneinrichtung 142 der Werkstückspindel 140 greifbar und in Richtung der Z-Achse aus der Führung 170 herausziehbar. Dabei ist auf einem Schlitten 194 das Werkzeug 196 angeordnet, welches nahe der Führung 170 im Arbeitsraum 18 in Richtung der Z-Achse unverschieblich steht und lediglich in Richtung der X-Achse, das heißt also senkrecht zur Mittelachse 78, zustellbar ist. Mit diesem Werkzeug 196 ist ein Langdrehen dadurch möglich, daß die Spindel 140 einerseits die am Ende 173 gespannte Materialstange drehend antreibt und andererseits ständig aus der Führung 170 herauszieht, wobei hierdurch die Vorschubbewegung in Z-Richtung entsteht, so daß das bearbeitete Werkstück W nach dem Prinzip des Schweizer Langdrehens herstellbar ist.

Beispielsweise ist eine derartige Langdrehbearbeitung in einem Teil der einander gegenüberliegenden Spindelstationen 190a bis f und 192a bis f möglich, während in einem anderen Teil der Spindelstationen ein Abstechen und gegebenenfalls ein endseitiges Bearbeiten erfolgt (z.B. in den Stationen 190e und 192e), wobei auch in diesem Fall die Werkstückspindel 140 vorzugsweise mit dem zentralen Führungskanal 141 versehen ist, so daß das im Wege des Langdrehens bearbeitete Werkstück W durch die Werkstückspindel 140 koaxial zu deren Mittelachse 78 hindurchschiebbar ist.

Ein derartiges Schweizer Langdrehen des Werkstücks W ist aber auch dadurch möglich, daß anstelle der Führung 170 eine Werkstückspindel 140 eingesetzt ist, deren Werkstückspanneinrichtung 142 beim Schweizer Langdrehen lediglich als Führung für die Materialstange 172 dient, so daß die Materialstange durch die jeweils andere Werkstückspindel 140, beispielsweise die Werkstückspindel 140 in den Positionen 42 in der beschriebenen Weise aus der Werkstückspindel 140 in den Positionen 62 herausziehbar ist und somit für das Schweizer Langdrehen die Werkstückspindel 140 in den Positionen 62 in gleicher Weise wirkt.

Allerdings kann die Werkstückspindel 140 in den Positionen 62 noch ferner dazu dienen, um in anderen Stationen 190 und 192 ein endseitiges Bearbeiten einerseits der durch diese hindurchgeschobenen Materialstange im Bereich des Endes 173 und andererseits des gegenüberliegenden Endes 171, das durch Abstechen des Werkstücks W von der Materialstange 172 entstanden ist, mittels einer der Werkstückspindel 140 in den Positionen 42 durchzuführen.

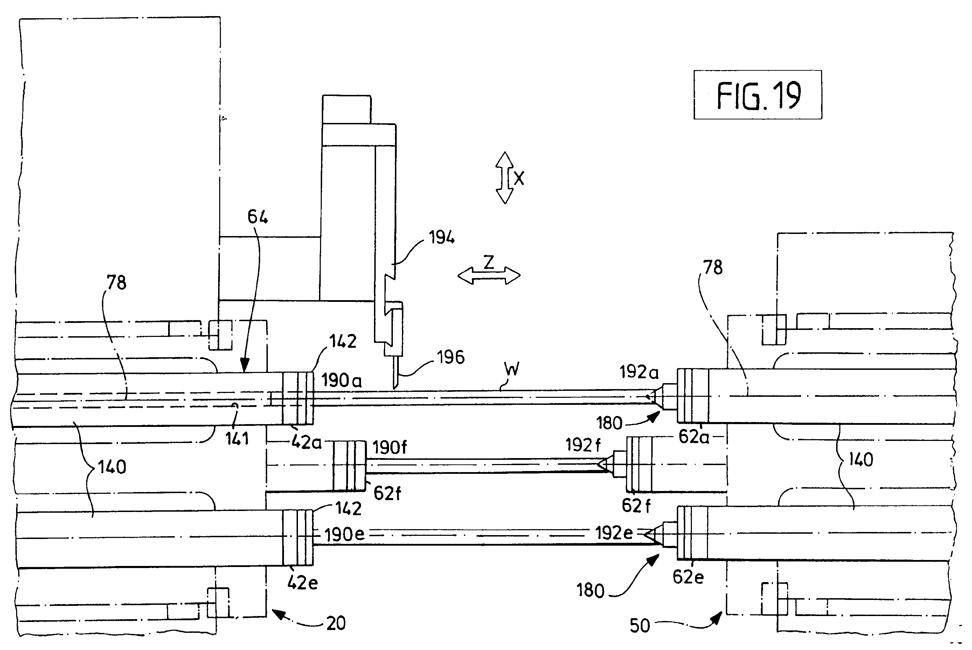

Bei einer weiteren Version, dargestellt in Fig. 19 ist wie bereits bei den vorherstehenden Versionen in jeder der Positionen 42 eine Werkstückspindel 140 vorgesehen, welche in Richtung der Mittelachse 78 verschiebbar ist und dieser gegenüberliegend in den gegenüberliegenden Positionen 62 ein Reitstock 180, wobei vorzugsweise auch die den Reitstock 180 tragende Pinole 64 in Richtung ihrer Mittelachse 78 verschiebbar ist.

Hiermit ist eine Längsdrehbearbeitung des Werkstücks W dadurch möglich, daß dieses einerseits in der Werkstückspanneinrichtung 142 der Werkstückspindel 140 gespannt ist, und andererseits in dem Reitstock 180, wobei eine Vorschubbewegung in Z-Richtung durch synchrone Verschiebung der beiden Pinolen 64 in den einander zugeordneten Positionen 42 und 62 erfolgt. Eine derartige Längsdrehbearbeitung ist in einer der einander gegenüberliegenden Spindelstationen 190a bis 190f und 192a bis 192f möglich oder auch nur in einem Teil derselben.

Die Trommeln 20 und 50 sind in diesem Fall synchron miteinander um die Drehachse 22 drehbar, so daß das Werkstück W jeweils von einem Paar gegenüberliegender Stationen 190a und 192a in ein nächstes Paar gegenüberliegender Stationen 190b und 192b durch Weiterschalten der Trommeln 20 und 50 bringbar ist, um mit den jeweils nächsten Stationen weitere Bearbeitungen vorzunehmen.

## Patentansprüche

1. Drehmaschine, insbesondere Mehrspindeldrehmaschine, umfassend ein Maschinengestell (10) mit mindestens einem Ständer (12, 14) und einem auf einer Seite des Ständers (12, 14) angeordneten Arbeitsraum (18),
mindestens eine an dem Ständer (12, 14) angeordnete und um eine Spindelachse (22) drehbare Werkstückspindel (140), welche mit einem Werkstückspannfutter (46) dem Arbeitsraum (18) zugewandt ist,
einen in Richtung einer X-Achse und einer Z-Achse gegenüber dem Ständer (12, 14) bewegbaren Werkzeugschlitten (194), auf welchem ein Bearbeitungswerkzeug (196) montiert ist, eine Schlittenführung (198), auf welcher der Werkzeugschlitten (194) so sitzt, daß dieser in der X-Richtung verschiebbar ist, ein eine Kugelgewindespindel (204) und eine Kugelgewindemutter (202) umfassendes X-Vorschubgetriebe für den Werkzeugschlitten (194), ein in Z-Richtung bewegbares Z-Verschiebeteil (206), an welchem die Schlittenführung (198) sitzt und welches sich durch den Ständer (12, 14) hindurch erstreckt und an Führungen (208, 210) des Ständers (12, 14) bewegbar gelagert ist,
**dadurch gekennzeichnet,** daß eine Antriebswelle (226) zum Antrieb der Kugelgewindespindel (204) des X-Vorschubgetriebes durch das Z-Verschiebeteil (206) verläuft und sich von einer Motorwelle (226) eines X-Vorschubmotors (230) bis zur Kugelgewindespindel (204) des X-Vorschubgetriebes erstreckt.

2. Drehmaschine nach Anspruch 1, dadurch gekennzeichnet, daß sich das Z-Verschiebeteil (206) in Z-Richtung vom Arbeitsraum (18) weg über die Führungen (208, 210) hinaus erstreckt.

3. Drehmaschine nach einem der Ansprüche 1 und 2, dadurch gekennzeichnet, daß das Z-Verschiebeteil (206) den die Führungen (208, 210) tragenden Ständer (12, 14) des Maschinengestells (10) durchsetzt und über diesen übersteht.

4. Drehmaschine nach einem der voranstehenden Ansprüche, dadurch gekennzeichnet, daß der mit der Antriebswelle (226) verbundene X-Vorschubmotor (230) an einem der Schlittenführung (198) abgewandten Ende des Z-Verschiebeteils (206) angeordnet ist.

5. Drehmaschine nach einem der voranstehenden Ansprüche, dadurch gekennzeichnet, daß der X-Vorschubmotor (230) auf einer dem Arbeitsraum (18) abgewandten Seite des Z-Verschiebeteils (206) angeordnet ist.

6. Drehmaschine nach einem der voranstehenden Ansprüche, dadurch gekennzeichnet, daß der X-Vorschubmotor (230) auf einer dem Arbeitsraum (18) gegenüberliegenden Seite der Führungen (208, 210) des Z-Verschiebeteils (206) angeordnet ist.

7. Drehmaschine nach einem der voranstehenden Ansprüche, dadurch gekennzeichnet, daß der X-Vorschubmotor (230) auf einer dem Arbeitsraum (18) gegenüberliegenden Seite des Ständers (12, 14) angeordnet ist.

8. Drehmaschinen nach einem der voranstehenden Ansprüche, dadurch gekennzeichnet, daß sich die Antriebswelle (226) parallel zur Z-Richtung erstreckt und das Z-Verschiebeteil (206) in dieser Richtung durchsetzt.

9. Drehmaschine nach einem der voranstehenden Ansprüche, dadurch gekennzeichnet, daß die Antriebswelle (226) über ein Kegelradgetriebe (234) in Antriebsverbindung mit der Kugelgewindespindel (204) steht.

10. Drehmaschine nach einem der voranstehenden Ansprüche, dadurch gekennzeichnet, daß neben dem Z-Verschiebeteil (206) ein eine Kugelgewindespindel (218) und eine Kugelgewindemutter (216) umfassendes Z-Vorschubgetriebe angeordnet ist, mit welchem das Z-Verschiebeteil (206) in Z-Richtung verschiebbar ist.

11. Drehmaschine nach Anspruch 10, dadurch gekennzeichnet, daß die Kugelgewindespindel (218) des Z-Vorschubgetriebes innerhalb des das Z-Verschiebeteil (206) lagernden Ständers (12, 14) angeordnet ist.

12. Drehmaschine nach Anspruch 10 oder 11, dadurch gekennzeichnet, daß die Kugelgewindemutter (216) des Z-Vorschubgetriebes an einem an dem Z-Verschiebeteil (206) angreifenden Halter (214) sitzt.

13. Drehmaschine nach einem der Ansprüche 10 bis 12, dadurch gekennzeichnet, daß zur Verschiebung des Z-Verschiebeteils (206) ein Z-Vorschubmotor (224) vorgesehen ist, welcher auf einer der Schlittenführung (198) gegenüberliegenden Seite des Ständers (12, 14) übersteht.

14. Drehmaschine nach einem der Ansprüche 10 bis 13, dadurch gekennzeichnet, daß zur Verschiebung des Z-Verschiebeteils (206) ein Z-Vorschubmotor (224) vorgesehen ist, welcher an dem Ständer (12, 14) gehalten ist.

15. Drehmaschine nach Anspruch 13 oder 14, dadurch gekennzeichnet, daß eine Antriebswelle (222) des Z-Vorschubmotors (224) mit der Kugelgewindespindel (218) des Z-Vorschubgetriebes verbunden ist.

16. Drehmaschine nach einem der voranstehenden Ansprüche, dadurch gekennzeichnet, daß das Maschinengestell (10) einen ersten Ständer (12) und einen zweiten Ständer (14) aufweist, zwischen denen der Arbeitsraum (18) angeordnet ist.

17. Drehmaschine nach Anspruch 16, dadurch gekennzeichnet, daß die Werkstückspindel (40) und das Z-Verschiebeteil (206) an demselben Ständer (12) angeordnet sind.

18. Drehmaschine nach Anspruch 16 oder 17, dadurch gekennzeichnet, daß die Werkstückspindel (40) an einem Ständer (12) und das Z-Verschiebeteil (206) an dem anderen Ständer (14) angeordnet sind.

19. Drehmaschine nach einem der voranstehenden Ansprüche, dadurch gekennzeichnet, daß die Werkstückspindel (40) an einer Spindeltrommel (20) angeordnet ist, die drehbar an dem Ständer (12) gelagert ist.

## Claims

1. A turning machine, in particular a multiple-spindle turning machine, comprising a machine frame (10) with at least one stand (12, 14) and an operating area (18) arranged on one side of the stand (12, 14), at least one work piece spindle (140) arranged on the stand (12, 14) and rotatable about a spindle axis (22), the work piece spindle with a work piece chuck (46) facing the operating area (18), a tool carriage (194) movable in the direction of an X-axis and a Z-axis with reference to the stand (12, 14), a machining tool (196) being mounted on the tool carriage, a carriage guide (198), upon which the tool carriage (194) is so mounted that it is displaceable in the X-direction, an X-feedgear mechanism for the tool carriage (194) which comprises a ball thread spindle (204) and a ball thread nut (202), a Z-displacement part (206) movable in the Z-direction, on which the carriage guide (198) is mounted and which extends completely through the stand (12, 14) and is movably mounted on guides (208, 210) of the stand (12, 14),
characterised in that a driving shaft (226) for driving the ball thread spindle (204) of the X-feedgear mechanism passes through the Z-displacement part (206) and extends from a motor shaft (226) of an X-feed motor (230) to the ball thread spindle (204) of the X-feedgear mechanism.

2. A turning machine according to claim 1, characterised in that the Z-displacement part (206) extends in the Z-direction away from the operating area (18) beyond the guides (208, 210).

3. A turning machine according to one of claims 1 and 2, characterised in that the Z-displacement part (206) penetrates and extends beyond the stand (12, 14) of the machine frame (10) which carries the guides (208, 210).

4. A turning machine according to any of the preceding claims, characterised in that the X-feed motor (230) connected with the drive shaft (226) is arranged at an end of the Z-displacement part (206) remote from the carriage guide (198).

5. A turning machine according to any of the preceding claims, characterised in that the X-feed motor (230) is arranged on a side of the Z-displacement part (206) remote from the operating area (18).

6. A turning machine according to any preceding claim, characterised in that the X-feed motor (230) is arranged on a side of the guides (208, 210) of the Z-displacement part (206) facing opposite to the operating area (18).

7. A turning machine according to any preceding claim, characterised in that the X-feed motor (230) is arranged on a side of the stand (12, 14) facing opposite to the operating area (18).

8. Turning machines according to any preceding claim, characterised in that the drive shaft (226) extends parallel to the Z-direction and penetrates the Z-displacement part (206) in this direction.

9. A turning machine according to any preceding claim, characterised in that the drive shaft (226) is in driving connection with the ball thread spindle (204) via a mitre gear (234).

10. A turning machine according to any preceding claim, characterised in that adjacent to the Z-displacement part (206) there is arranged a Z-feedgear mechanism comprising a ball thread spindle (218) and a ball thread nut (216), the Z-displacement part (206) being displaceable in the Z-direction by the Z-feedgear mechanism.

11. A turning machine according to claim 10, characterised in that the ball thread spindle (218) of the Z-feedgear mechanism is arranged within the stand (12, 14) mounting the Z-displacement part (206).

12. A turning machine according to claim 10 or 11, characterised in that the ball thread nut (216) of the Z-feedgear mechanism is mounted on a holder (214) engaging the Z-displacement part (206).

13. A turning machine according to any of claims 10 to 12, characterised in that for the displacement of the Z-displacement part (206) there is provided a Z-feed motor (224) which projects beyond a side of the stand (12,14) facing opposite to the carriage guide (198).

14. A turning machine according to any of claims 10 to 13, characterised in that for the displacement of the Z-displacement part (206) there is provided a Z-feed motor (224), which is held on the stand (12, 14).

15. A turning machine according to claim 13 or 14, characterised in that a drive shaft (222) of the Z-feed motor (224) is connected with the ball thread spindle (218) of the Z-feedgear mechanism.

16. A turning machine according to any preceding claim, characterised in that the machine frame (10) comprises a first stand (12) and a second stand (14), between which there is arranged the operating area (18).

17. A turning machine according to claim 16, characterised in that the work piece spindle (40) and the Z-displacement part (206) are arranged on the same stand (12).

18. A turning machine according to claim 16 or 17, characterised in that the work piece spindle (40) is arranged on one stand (12) and the Z-displacement part (206) is arranged on the other stand (14).

19. A turning machine according to any preceding claim, characterised in that the work piece spindle (40) is arranged on a spindle drum (20) which is mounted rotatably on the stand (12).

## Revendications

1. Machine de tournage ou tour, notamment tour multibroche, comprenant
un bâti de machine (10) avec au moins un montant (12, 14) et un espace de travail (18) disposé sur un côté du montant (12, 14),
au moins une broche porte-pièce (140) disposée sur le montant (12, 14) et pouvant tourner autour d'un axe de broche (22), et qui est dirigée, avec un mandrin de serrage de pièce (46), vers l'espace de travail (18), un chariot porte-outil (194) pouvant être déplacé dans la direction d'un axe X et d'un axe Z par rapport au montant (12, 14) et sur lequel est monté un outil d'usinage (196),
un guidage de chariot (198) sur lequel est placé le chariot porte-outil (194) de façon telle, que celui-ci puisse coulisser dans la direction X, une transmission d'avance X comprenant une vis à billes (204) et un écrou à billes (202), pour le chariot porte-outil (194),
une pièce de coulissement Z (206) pouvant être déplacée dans la direction Z, sur laquelle est placé le guidage de chariot (198), et qui s'étend à travers le montant (12, 14) en étant guidée de manière mobile dans des guidages (208, 210) du montant (12, 14),
**caractérisé** en ce qu'un arbre d'entraînement (226) destiné à l'entraînement de la vis à billes (204) de la transmission d'avance X, passe au travers de la pièce de coulissement Z (206), et s'étend d'un arbre moteur (228) d'un moteur d'avance X (230), jusqu'à la vis à billes (204) de la transmission d'avance X.

2. Tour selon la revendication 1, **caractérisé** en ce que la pièce de coulissement X (206) s'étend, dans la direction Z, en partant de l'espace de travail (18), par-delà les guidages (208, 210).

3. Tour selon l'une des revendications 1 et 2, **caractérisé** en ce que la pièce de coulissement Z (206) traverse le montant (12, 14) portant les guidages (208, 210), et fait saillie au-delà de celui-ci.

4. Tour selon l'une des revendications précédentes, **caractérisé** en ce que le moteur d'avance X (230) relié à l'arbre d'entraînement (226), est disposé à une extrémité de la pièce de coulissement Z (206), opposée à celle où se trouve le guidage de chariot (198).

5. Tour selon l'une des revendications précédentes, **caractérisé** en ce que le moteur d'avance X (230) est disposé sur un côté de la pièce de coulissement Z (206), opposé à celui où se trouve l'espace de travail (18)

6. Tour selon l'une des revendications précédentes, **caractérisé** en ce que le moteur d'avance X (230) est disposé sur un côté des guidages (208, 210) de la pièce de coulissement Z (206), opposé à l'espace de travail (18).

7. Tour selon l'une des revendications précédentes, **caractérisé** en ce que le moteur d'avance X (230) est disposé sur un côté du montant (12, 14), opposé à celui où se trouve l'espace de travail (18).

8. Tour selon l'une des revendications précédentes, **caractérisé** en ce que l'arbre d'entraînement (226) s'étend parallèlement à la direction Z et traverse la pièce de coulissement Z (206) dans cette direction.

9. Tour selon l'une des revendications précédentes, **caractérisé** en ce que l'arbre d'entraînement (226) est en liaison d'entraînement avec la vis à billes (204), par l'intermédiaire d'une transmission à roues coniques (234).

10. Tour selon l'une des revendications précédentes, **caractérisé** en ce qu'à côté de la pièce de coulissement Z (206) est disposée une transmission d'avance Z comprenant une vis à billes (218) et un écrou à billes (216), à l'aide de laquelle la pièce de coulissement Z (206) peut coulisser dans la direction Z.

11. Tour selon la revendication 10, **caractérisé** en ce que la vis à billes (218) de la transmission d'avance Z est disposée à l'intérieur du montant (12, 14) dans lequel est montée la pièce de coulissement Z (206).

12. Tour selon la revendication 10 ou 11, **caractérisé** en ce que l'écrou à billes (216) de la transmission d'avance Z est placé sur un support (214) agissant sur la pièce de coulissement Z (206).

13. Tour selon l'une des revendications 10 à 12, **caractérisé** en ce que pour le coulissement de la pièce de coulissement Z (206), il est prévu un moteur d'avance Z (224), qui fait saillie du montant (12, 14) d'un côté de celui-ci, opposé à celui où se trouve le guidage de chariot (198).

14. Tour selon l'une des revendications 10 à 13, **caractérisé** en ce que pour le coulissement de la pièce de coulissement Z (206), il est prévu un moteur d'avance Z (224), qui est maintenu sur le montant (12, 14).

15. Tour selon la revendication 13 ou 14, **caractérisé** en ce qu'un arbre d'entraînement (222) du moteur d'avance Z (224) est relié à la vis à billes (218) de la transmission d'avance Z.

16. Tour selon l'une des revendications précédentes, **caractérisé** en ce que le bâti de machine (10) comprend un premier montant (12) et un second montant (14) entre lesquels est agencé l'espace de travail (18).

17. Tour selon la revendication 16, **caractérisé** en ce que la broche porte-pièce (40) et la pièce de coulissement Z (206) sont disposées sur le même montant (12).

18. Tour selon la revendication 16 ou 17, **caractérisé** en ce que la broche porte-pièce (40) est disposée sur un montant (12) et la pièce de coulissement Z (206) sur l'autre montant (14).

19. Tour selon l'une des revendications précédentes, **caractérisé** en ce que la broche porte-pièce (40) est disposée sur un tambour de broche (20), qui est monté rotatif sur le montant (12).
